(19) Europäisches Patentamt
European Patent Office
Office européen des brevets

(11) **EP 4 566 902 A2**

(12) **EUROPEAN PATENT APPLICATION**

(43) Date of publication:
**11.06.2025 Bulletin 2025/24**

(21) Application number: 25168279.5

(22) Date of filing: **03.04.2025**

(51) International Patent Classification (IPC):
***B60W 30/095*** (2012.01)    ***B60W 50/00*** (2006.01)

(52) Cooperative Patent Classification (CPC):
**B60W 30/0953; B60W 30/095; B60W 30/0956; B60W 50/0097;** B60W 2520/10; B60W 2520/105; B60W 2520/14; B60W 2554/402; B60W 2554/4041; B60W 2554/4042; B60W 2556/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.04.2024 CN 202410405299**

(71) Applicant: **Beijing Horizon Robotics Technology Research and Development Co., Ltd.
Beijing 100094 (CN)**
(72) Inventors:
 • PEI, Xizhe
   **Beijing, 100094 (CN)**
 • QI, Lianjun
   **Beijing, 100094 (CN)**

(74) Representative: **V.O.
P.O. Box 87930
2508 DH Den Haag (NL)**

(54) **METHOD FOR DETERMINING COLLISION RISK STATE, APPARATUS, ELECTRONIC DEVICE, AND STORAGE MEDIUM**

(57) An embodiment of the present disclosure discloses a method for determining a collision risk state, an apparatus, an electronic device and a storage medium, wherein the method includes: determining first ego vehicle state information of a vehicle at a current time frame and first obstacle state information of an obstacle around the vehicle at the current time frame; predicting, based on the first ego vehicle state information, first position probability distribution information of the vehicle at a future time frame; predicting, based on the first obstacle state information, second position probability distribution information of the obstacle at the future time frame; and determining the collision risk state of the vehicle with the obstacle based on the first position probability distribution information and the second position probability distribution information corresponding to the future time frame.

FIG. 1

EP 4 566 902 A2

**Description**

**FIELD OF THE PRESENT DISCLOSURE**

The present disclosure relates to assisted driving technology, particularly to a method for determining a collision risk state, an apparatus, an electronic device, and a storage medium.

**BACKGROUND OF THE PRESENT DISCLOSURE**

In the field of assisted driving, automatic emergency braking (abbreviation: AEB) function is an active safety control function during driving of the vehicle, and can automatically take measures to assist the driver to avoid or mitigate a collision if the driver brakes too late, has too little braking force, or does not take braking measures at all. The automatic emergency braking function requires real-time prediction of the trajectory of an ego vehicle and an obstacle within a certain period of time to determine whether there is a risk of collision and thus determine whether to activate the automatic emergency braking function. Trajectory prediction accuracy often directly affects whether emergency braking is started, and thus affects the occurrence of traffic accidents. Therefore, trajectory prediction requires high accuracy and high timeliness, which requires rapid trajectory prediction for rapid collision risk assessment. In related technologies, based on current states of the ego vehicle and the obstacle, a uniform variable velocity motion model is usually used to calculate an interference between traveling trajectories of the ego vehicle and the obstacle, and then determine a collision risk based on the interference. However, the interference between traveling trajectories of the ego vehicle and the obstacle is expressed by a Boolean variable, and the data on which the trajectories of the ego vehicle and the obstacle are dependent is calculated as data collected by the sensor. The data collected by the sensor is prone to have noise, which leads to large error of the calculated ego vehicle trajectory and obstacle trajectory, and affects the accuracy of a collision risk assessment result.

**SUMMARY OF THE PRESENT DISCLOSURE**

In order to solve the above-mentioned technical problem, embodiments of the present disclosure provide a method for determining a collision risk state, an apparatus, an electronic device and a storage medium to improve the accuracy and validity of the collision risk state.

In a first aspect of the present disclosure, there is provided a method for determining a collision risk state, including: determining first ego vehicle state information of a vehicle at a current time frame and first obstacle state information of an obstacle around the vehicle at the current time frame; predicting, based on the first ego vehicle state information, first position probability distribution information of the vehicle at a future time frame; predicting, based on the first obstacle state information, second position probability distribution information of the obstacle at the future time frame; and determining the collision risk state of the vehicle with the obstacle based on the first position probability distribution information and the second position probability distribution information corresponding to the future time frame.

In a second aspect of the present disclosure, there is provided an apparatus for determining a collision risk state, including: a first processing module configured for determining first ego vehicle state information of a vehicle at a current time frame and first obstacle state information of an obstacle around the vehicle at the current time frame; a second processing module configured for predicting, based on the first ego vehicle state information, first position probability distribution information of the vehicle at a future time frame; a third processing module configured for predicting, based on the first obstacle state information, second position probability distribution information of the obstacle at the future time frame; and a fourth processing module configured for determining the collision risk state of the vehicle with the obstacle based on the first position probability distribution information and the second position probability distribution information corresponding to the future time frame.

In a third aspect of the present disclosure, there is provided a computer-readable storage medium having stored thereon a computer program, which, when executed by a processor, cause the processor to implement the method for determining a collision risk state according to any of the above-mentioned embodiments of the present disclosure.

In a fourth aspect of the present disclosure, there is provided an electronic device including: a processor; a memory for storing an executable instruction of the processor, wherein the processor is configured to read the executable instruction from the memory and to execute the instruction to implement the method for determining a collision risk state according to any of the above-mentioned embodiments of the present disclosure.

In a fifth aspect of the present disclosure, there is provided a computer program product comprising computer-readable program instructions, which, when executed by a processor, cause the processor to implement the method for determining a collision risk state according to any of the above-mentioned embodiments of the present disclosure.

Based on the method for determining a collision risk state, apparatus, electronic device, and storage medium in accordance with the above-described embodiments of the present disclosure, it is possible to determine first ego vehicle state information of a vehicle at a current time frame and first obstacle state information of an obstacle around the vehicle at the current time frame. First position probability distribution information of the vehicle at a future time frame may be predicted based on the first ego vehicle state information, and second position probability distribution information of the obstacle at the future time frame may be predicted based on the first state information about the obstacle. Further, it is possible to determine the collision risk state of the vehicle with the obstacle based on the first position probability distribution information and the second position probability distribution information corresponding to the future time frame. And there may be a plurality of future time frames. Since the position probability distribution information about the ego vehicle and the obstacle in the future time frame is predicted, a result used for judging the collision risk state can be a probability value rather than a Boolean variable, which helps to improve a tolerance of a trajectory prediction result to a noise, thereby reducing an adverse effect of a sensor data noise on the collision risk state and improving robustness, accuracy and validity of the collision risk state.

## BRIEF DESCRIPTION OF THE DRAWINGS

FIG. 1 is an exemplary application scenario of a method for determining a collision risk state in accordance with the present disclosure;

FIG. 2 is a schematic flow diagram of a method for determining a collision risk state in accordance with an exemplary embodiment of the present disclosure;

FIG. 3 is a schematic flow diagram of a method for determining a collision risk state in accordance with another exemplary embodiment of the present disclosure;

FIG. 4 is a schematic flow diagram of a method for determining a collision risk state in accordance with yet another exemplary embodiment of the present disclosure;

FIG. 5 is a schematic flow diagram of a method for determining a collision risk state in accordance with yet another exemplary embodiment of the present disclosure;

FIG. 6 is a schematic flow diagram of a method for determining a collision risk state in accordance with yet another exemplary embodiment of the present disclosure;

FIG. 7 is a schematic flow diagram of a method for determining a collision risk state in accordance with yet another exemplary embodiment of the present disclosure;

FIG. 8 is a schematic flow diagram of a method for determining a collision risk state in accordance with yet another exemplary embodiment of the present disclosure;

FIG. 9 is a block flow diagram of a method for determining a collision risk state in accordance with an exemplary embodiment of the present disclosure;

FIG. 10 is a block flow diagram of information noise reduction processing in accordance with an exemplary embodiment of the present disclosure;

FIG. 11 is a block flow diagram of identification of an obstacle type in accordance with an exemplary embodiment of the present disclosure;

FIG. 12 is a block flow diagram of completeness check of information in accordance with an exemplary embodiment of the present disclosure;

FIG. 13 is a block flow diagram of ego vehicle position probability distribution information prediction in accordance with an exemplary embodiment of the present disclosure;

FIG. 14 is a block flow diagram of obstacle position probability distribution information prediction in accordance with an exemplary embodiment of the present disclosure;

FIG. 15 is a schematic diagram of a calculation principle of a position distribution overlap rate in accordance with an exemplary embodiment of the present disclosure;

FIG. 16 is a schematic structural diagram of an apparatus for determining a collision risk state in accordance with an exemplary embodiment of the present disclosure;

FIG. 17 is a schematic structural diagram of an apparatus for determining a collision risk state in accordance with another exemplary embodiment of the present disclosure; and

FIG. 18 is a structural diagram of an electronic device in accordance with an embodiment of the present disclosure.

## DESCRIPTION OF THE EMBODIMENTS

In order to explain the present disclosure, example embodiments of the present disclosure will be described in detail below with reference to the accompanying drawings. It is apparent that the described embodiments are only a part of the embodiments of the present disclosure, not all of them, and it is to be understood that the present disclosure is not limited to the example embodiments.
It should be noted that the relative arrangement of components and steps, numerical expressions and numerical values set forth in these embodiments do not limit the scope of the disclosure unless specifically stated otherwise.

Overview of the present disclosure

In the process of implementing the present disclosure, the inventors find that in the field of assisted driving, automatic emergency braking (abbreviation: AEB) function is an active safety control function during driving of the vehicle, and can automatically take measures to assist the driver to avoid or mitigate a collision if the driver brakes too late, has too little braking force, or does not take braking measures at all. The automatic emergency braking function requires real-time prediction of the trajectory of an ego vehicle and an obstacle within a certain period of time to determine whether there is a risk of collision and thus determine whether to activate the automatic emergency braking function. Accuracy of trajectory prediction in a short time often directly affects whether emergency braking is started, and thus affects the occurrence of traffic accidents. Therefore, trajectory prediction in a short time requires high accuracy and high timeliness, which requires rapid trajectory prediction for rapid collision risk assessment. In related technologies, based on current states of the ego vehicle and the obstacle, a uniform variable velocity motion model is usually used to calculate an interference between traveling trajectories of the ego vehicle and the obstacle, and then determine a collision risk based on the interference. However, the case of interference of the traveling trajectories of the ego vehicle and the obstacle is represented by a Boolean variable, which includes true and false of the traveling trajectories of the ego vehicle and the obstacle. The data on which the trajectories of the ego vehicle and the obstacle are dependent is calculated as data collected by the sensor. The data collected by the sensor is prone to have noise, which leads to large error of the calculated ego vehicle trajectory and obstacle trajectory, and affects the accuracy of a collision risk assessment result.

Exemplary overview

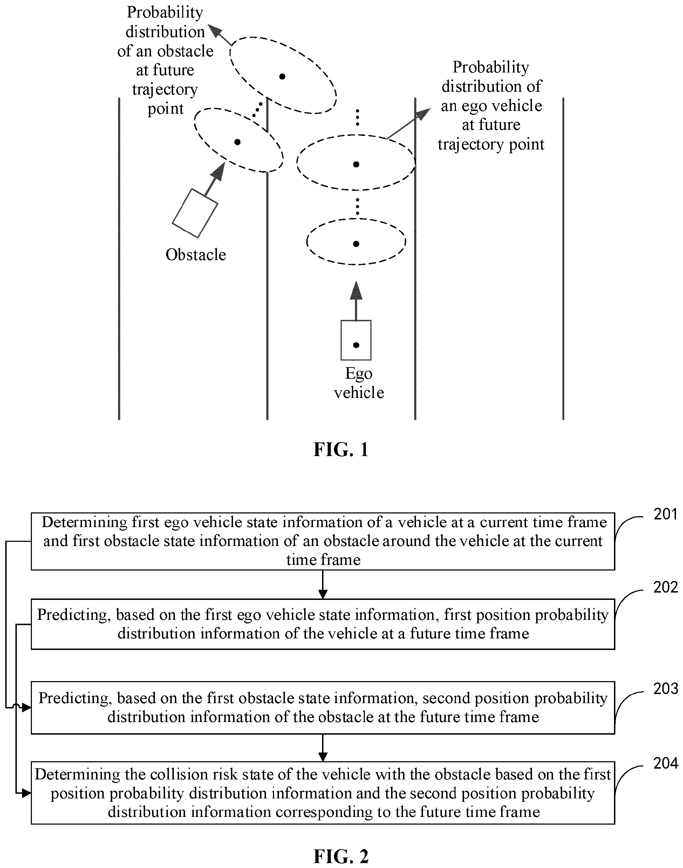

FIG. 1 is an exemplary application scenario of a method for determining a collision risk state in accordance with the present disclosure. As shown in FIG. 1, during traveling of a vehicle (i.e. an ego vehicle), environmental sensing and ego vehicle state sensing can be performed by various sensors on the vehicle. Using the method for determining a collision risk state according to embodiments of the present disclosure, it is possible to determine first ego vehicle state information of a vehicle at a current time frame and first obstacle state information of an obstacle around the vehicle at the current time frame. Probability distribution information (which may be referred to as first position probability distribution information) respectively corresponding to the ego vehicle at at least one future time frame is predicted based on first ego vehicle state information, such as a probability distribution of an ego vehicle future trajectory point in FIG. 1; and taking an ego vehicle state and an obstacle state satisfying a Gaussian distribution as an example, the probability distribution of an ego vehicle future trajectory point may be a probability distribution ellipse having a certain mean and variance; Each position within a range of the ellipse may have a certain probability to belong to a future trajectory point of the ego vehicle. Similarly, position probability distribution information (which may be referred to as second position probability distribution information) of the obstacle at each future time frame may be predicted based on the first obstacle state information, such as a probability distribution of an obstacle future trajectory point in FIG. 1. Further, it is possible to determine the collision risk state between the vehicle and the obstacle based on the first position probability distribution information and the second position probability distribution information respectively corresponding to each future time frame. Since the position probability distribution information about the ego vehicle and the obstacle at the future time frame is predicted, a result used for judging the collision risk state can be expressed by a probability value rather than expressed by a Boolean variable as in the above-mentioned related technologies, which helps to improve a tolerance of a trajectory prediction result to a noise, thereby reducing an adverse effect of a sensor data noise on the collision risk state and improving robustness, accuracy and validity of the collision risk state. In the embodiments, the time frame may be a time point or timing.

Exemplary methods

FIG. 2 is a schematic flow diagram of a method for determining a collision risk state in accordance with an exemplary embodiment of the present disclosure. The present embodiment can be applied to an electronic device, specifically such as an vehicle-mounted computing platform, and as shown in FIG. 2, the method of the embodiment of the present disclosure can include the following steps:

In step 201, determining first ego vehicle state information of a vehicle at a current time frame and first obstacle state information of an obstacle around the vehicle at the current time frame.

The first ego vehicle state information may include kinematic information about the vehicle at the current time frame, and the kinematic information of the ego vehicle may include a velocity, an acceleration, a yaw, a yaw rate, a position, etc. The first obstacle state information may include kinematic information and size information about the obstacle at the current time frame. The kinematic information about the obstacle may include a velocity, an acceleration, a yaw, a yaw rate, a position, etc. of the obstacle in a local coordinate system of the vehicle, e.g. an ego vehicle coordinate system of the vehicle in the current time frame. The size information about the obstacle may include a length, a width, etc. of the obstacle.

In some optional embodiments, the first obstacle state information may also include a type of the obstacle. The type may include a vehicle, a pedestrian, a two-wheeled vehicle, other types, etc. and may be specifically set according to actual requirements.

In some optional embodiments, the first ego vehicle state information may be the state information about the vehicle in a global coordinate system. The global coordinate system may be, for example, a world coordinate system, an ego vehicle coordinate system of the vehicle at an initial position, or the like, without specific limitation.

In some optional embodiments, the first ego vehicle state information and the first obstacle state information may be obtained by sensing. For example, the first ego vehicle state information may be determined based on ego vehicle-related data collected by various sensors on the vehicle, and the first obstacle state information may be determined based on environment-related data collected by various environment-sensing sensors on the vehicle.

In some optional embodiments, the first ego vehicle state information and the first state information about the obstacle may be pre-processed state information. The manner of pre-processing may include, for example, at least one of data cleaning, noise reduction processing, completeness check, etc. to improve the accuracy, validity, completeness, etc. of the state information.

In some optional embodiments, the quantity of obstacle(s) may be one or more. For each obstacle, the collision risk state with the vehicle can be determined according to the method of the embodiments of the present disclosure.

In step 202, predicting, based on the first ego vehicle state information, first position probability distribution information of the vehicle at a future time frame.

In the embodiments of the present disclosure, take a future time frame as an example, which may be taken as a target future time frame, and the at least one future time frame may be used, i.e. one or more future time frames. It can be determined by a pre-set prediction time window and frame interval. For example, if the prediction time window is 3 seconds, 20 frames per second, 60 future time frames may be determined, and any one of the future time frames may be taken as a target future time frame.

In some optional embodiments, the first position probability distribution information may include a position mean and a variance. For any future time frame, the distribution probability of the position of the vehicle at the future time frame may be determined based on the position mean and variance corresponding to the future time frame. For example, based on the position mean and variance, the probability of each position at which the vehicle may be within an elliptical region (see FIG. 1) at the future time frame may be determined.

In some optional embodiments, the first position probability distribution information of the vehicle at the at least one future time frame respectively may be predicted based on any practicable manner of prediction. For example, the first position probability distribution information of the vehicle at the at least one future time frame respectively may be predicted based on a neural network prediction model, and the first position probability distribution information of the vehicle at the at least one future time frame respectively may be predicted based on an unscented transformation and a state transition equation (which may also be referred to as state transition function) of the vehicle, etc.

In step 203, predicting, based on the first obstacle state information, second position probability distribution information of the obstacle at the future time frame.

Here, the specific manner of predicting the second position probability distribution information of the obstacle in the future time frame may be similar to predicting the first position probability distribution information about the vehicle in step 202, which will not be described in detail herein.

It should be noted that step 202 and step 203 may not be in sequential order.

In step 204, determining the collision risk state of the vehicle with the obstacle based on the first position probability distribution information and the second position probability distribution information corresponding to the future time frame.

For each future time frame, after obtaining the first position probability distribution information and the second position probability distribution information corresponding to the future time frame, the position distribution crossing probability (which may also be referred to as position distribution overlap rate, or simply overlap rate) of the vehicle and the obstacle at the future time frame can be determined based on the first position probability distribution information and the second position probability distribution information corresponding to the future time frame, and then the collision risk state between the vehicle and the obstacle can be determined based on the position distribution crossing probability and a probability threshold (which may be referred to as an overlap rate threshold) corresponding to the future time frame.

Using the method for determining a collision risk state according to embodiments, it is possible to determine first ego vehicle state information of a vehicle at a current time frame and first obstacle state information of an obstacle around the vehicle at the current time frame. First position probability distribution information of the vehicle at a future time frame may be predicted based on the first ego vehicle state information, second position probability distribution information of the obstacle at each future time frame may be predicted based on the first obstacle state information. Further, it is possible to determine the collision risk state of the vehicle with the obstacle based on the first position probability distribution information and the second position probability distribution information corresponding to the future time frame. Since the position probability distribution information about the ego vehicle and the obstacle in the future time frame is predicted, a result used for judging the collision risk state can be a probability value rather than a Boolean variable, which helps to improve a tolerance of a trajectory prediction result to a noise, thereby reducing an adverse effect of a sensor data noise on the collision risk state and improving robustness, accuracy and validity of the collision risk state.

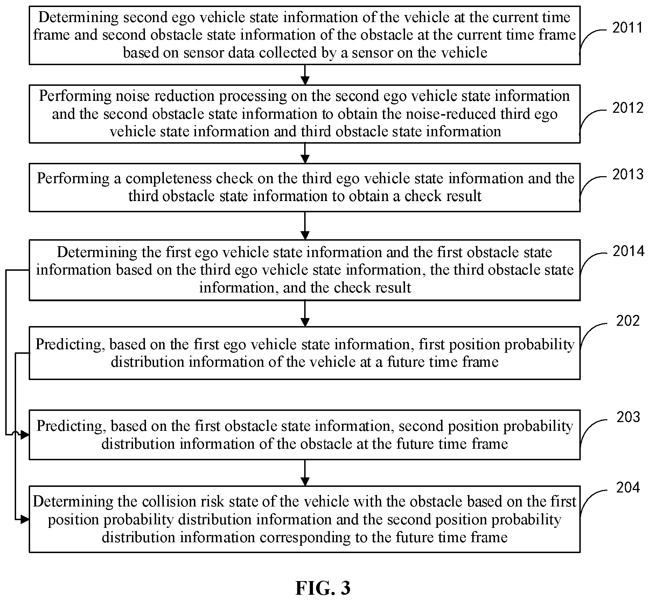

FIG. 3 is a schematic flow diagram of a method for determining a collision risk state in accordance with another exemplary embodiment of the present disclosure.

In some optional embodiments, as shown in FIG. 3, the step 201 of determining first ego vehicle state information of a vehicle at a current time frame and first obstacle state information of an obstacle around the vehicle at the current time frame may include:

In step 2011, determining second ego vehicle state information of the vehicle at the current time frame and second obstacle state information of the obstacle at the current time frame based on sensor data collected by a sensor on the vehicle.

The sensors on the vehicle may include an inertial measurement unit (abbreviation: IMU), a global positioning system (abbreviation: GPS), a camera, a lidar, a millimeter wave radar, etc. The second ego vehicle state information about the vehicle may be determined based on data collected by an inertial measurement unit, a global positioning system, or the like. The second obstacle state information may be determined based on data collected by a sensor such as a camera, a lidar, a millimeter-wave radar, and the like. The second ego vehicle state information and the second obstacle state information may be original state information obtained through perception, namely, state information which has not been processed by cleaning, noise reduction, etc.

In some optional embodiments, the sensor data may be data cleaned to obtain cleaned sensor data, and the second ego vehicle state information about the vehicle at the current time frame and the second obstacle state information at the current time frame may be determined based on the cleaned sensor data. The quality of the sensor data can be improved by data cleaning, such that the validity of the obtained second ego vehicle state information and the second obstacle state information can be further improved.

In step 2012, performing noise reduction processing on the second ego vehicle state information and the second obstacle state information to obtain the noise-reduced third ego vehicle state information and third obstacle state information.

Noise reduction processing is used to eliminate or reduce noise in the state information to improve the accuracy and validity of the state information.

In some optional embodiments, noise reduction processing may be performed on the second ego vehicle state information and the second obstacle state information in any implementable noise reduction processing manner to obtain noise-reduced third ego vehicle state information and third obstacle state information. For example, noise reduction may be performed by filtering. The filtering manner may include unscented Kalman filtering, particle filtering, etc. and the specific manner is not limited.

In step 2013, performing a completeness check on the third ego vehicle state information and the third obstacle state information to obtain a check result.

The completeness check may include an information channel quantity check, an information continuity check, an information validity check, etc. for checking whether the information channel quantity, continuity, validity, etc. of the third ego vehicle state information and the third obstacle state information satisfy corresponding requirements, so as to further ensure the validity and reliability of the state information. The quantity of information channels may refer to the quantity of information components included in the state information. For example, the third ego vehicle state information includes six information channels of speed, acceleration, yaw angle, yaw rate, lateral position, and longitudinal position of the vehicle. As another example, the third obstacle state information may include information channels of speed, acceleration, yaw angle, yaw rate, lateral position, longitudinal position, length, width, etc. Information continuity is susceptible to numerous factors, such as information discontinuity due to an interruption in sensor monitoring. For example, the obstacle type suddenly changes from a pedestrian to a vehicle, resulting in information discontinuity. Information validity may refer to the rationality of information. For example, when the obstacle type is a vehicle, whether the length and width of the obstacle meet the length and width requirements of an actual vehicle shall be determined. As another example, whether the vehicle yaw rate is within a corresponding yaw rate threshold range shall be determined.

In some optional embodiments, it may be determined whether the quantity of information channels meets the corresponding requirements based on a comparison of the quantity of information channels of the state information with the pre-set quantity of information channels.

In some optional embodiments, a tolerance coefficient may be set and the current information threshold range is determined from a historical mean and the tolerance coefficient. It is checked whether the state information (the third ego vehicle state information or the third obstacle state information) is within the current information threshold range. For example, the tolerance coefficient may be expressed as $\varepsilon$, the state information is expressed as $x$, and if $x$ satisfies the following condition, it is determined that the state information satisfies a continuity condition.

$$x \in [(1 - \varepsilon)\bar{x}, (1 + \varepsilon)\bar{x}]$$

Here, $\bar{x}$ is a historical mean, i.e. a mean of historical state information.

In step 2014, determining the first ego vehicle state information and the first obstacle state information based on the third ego vehicle state information, the third obstacle state information, and the check result.

If a result of the completeness check of the third ego vehicle state information and the third obstacle state information satisfies the completeness requirement, the third ego vehicle state information may be determined as the first ego vehicle state information, and the third obstacle state information may be determined as the first obstacle state information.

The present embodiment obtains more accurate and complete first ego vehicle state information and first obstacle state information by performing noise reduction processing and completeness check on the second ego vehicle state information and second obstacle state information obtained perceptually, which helps to improve the accuracy and validity of ego vehicle and obstacle state information.

In some optional embodiments, the step 2012 of performing noise reduction processing on the second ego vehicle state information and the second obstacle state information to obtain the noise-reduced third ego vehicle state information and third obstacle state information may include: performing noise reduction processing on the second ego vehicle state information based on an unscented Kalman filtering to obtain the third ego vehicle state information, and performing noise reduction processing on the second obstacle state information based on the unscented Kalman filtering to obtain the third obstacle state information.

The main idea of unscented Kalman Filter (abbreviation: UKF) is based on unscented transformation (abbreviation: UT), a group of specific sampling points (called sigma points) are selected, and these sampling points represent the probability distribution of state and noise, so as to avoid linearization, which can avoid linearization errors caused by first-order Taylor expansion. By filtering and performing noise reduction on the second ego vehicle state information based on the unscented Kalman filtering, the noise-reduced third ego vehicle state information can be obtained. By filtering and performing noise reduction on the second state information of the vehicle based on the unscented Kalman filtering, the noise-reduced third obstacle state information can be obtained.

This embodiment uses unscented Kalman filtering to perform noise reduction on the second ego vehicle state information and the second obstacle state information, which can effectively eliminate or reduce the adverse effects of noise on the predicted result of the position probability distribution, thereby improving the accuracy and validity of the collision risk state.

In some optional embodiments, the performing noise reduction processing on the second ego vehicle state information based on an unscented Kalman filtering to obtain the third ego vehicle state information may include that:

1. An ego vehicle state vector is determined based on the second ego vehicle state information.

The ego vehicle state vector can be represented as follows:

$$X_k = \begin{bmatrix} a & v & \theta & \dot{\theta} & x & y \end{bmatrix}^T$$

wherein $k$ indicates that currently it is a $k$th iteration, $a$ indicates an ego vehicle acceleration, $v$ indicates an ego vehicle speed, $\theta$ indicates an ego vehicle yaw angle, $\dot{\theta}$ indicates an ego vehicle yaw rate, $x$ indicates a longitudinal position coordinate of the ego vehicle, $y$ indicates a lateral position coordinate of the ego vehicle, and T indicates a transpose.

2. An unscented transformation is performed on the ego vehicle state vector to obtain a pre-set quantity of third sampling state(s) (sigma point(s)) and a third weight respectively corresponding to each of the third sampling state(s).

The pre-set quantity can be determined according to a dimension of the ego vehicle state vector. For example, the dimension of the ego vehicle vector is expressed as n, as the dimension $n = 6$ of $X_k$ described above. A $i$th third sampling state may be represented as follows:

$$\begin{cases} X^{(0)} = \bar{X}, \; i = 0 \\ X^{(i)} = \bar{X} + \left(\sqrt{(n + \lambda)P}\right)_i, \; i = 1, 2, \dots, n \\ X^{(i)} = \bar{X} - \left(\sqrt{(n + \lambda)P}\right)_i, \; i = n + 1, n + 2, \dots, 2n \end{cases}$$

A third weight respectively corresponding to each of the third sampling state(s) can be expressed as follows:

$$\begin{cases} \omega_m^{(0)} = \dfrac{\lambda}{n+\lambda} \\ \omega_c^{(0)} = \dfrac{\lambda}{n+\lambda} + (1 - a^2 + \beta) \\ \omega_m^{(i)} = \omega_c^{(i)} = \dfrac{\lambda}{2(n+\lambda)}, i = 1, 2, \dots, 2n \end{cases}$$

wherein $\bar{X}$ denotes a mean of the state vector, and here $\bar{X} = X_k$. The parameter $\lambda$ is a pre-set scaling value for reducing a prediction error, for example, $\lambda = a^2(n + \kappa) - n$. $P$ indicates a covariance matrix of the state vector. $P$ is initially a pre-set initial noise, and is continuously updated with the filtering iteration process of the vehicle traveling process. $\left(\sqrt{(n + \lambda)P}\right)_i$ indicates a $i$th column of the matrix $\sqrt{(n + \lambda)P}$. m indicates a mean, c indicates a variance, namely, $\omega_m^{(i)}$ indicates a mean weight (namely, a third mean weight), and $\omega_c^{(i)}$ indicates a variance weight (namely, a third variance weight). $a$, $\kappa$, and $\beta$ are all pre-set parameter values, $a$ is used for controlling the distribution state of sampling point(s), and $\beta$ is a non-negative weight coefficient which can be used for combining moments of higher-order terms in the equation, such that the errors of the higher-order terms can be included. The determination of $\kappa$ needs to guarantee that $(n + \lambda)P$ is a semi-positive definite matrix.

3. A third predicted state respectively corresponding to each of the third sampling state(s) is determined based on a first filtering state transition function.

The first filtering state transition function may be expressed as:

$$X^{(i)}(k + 1 \mid k) = f\left[k, X^{(i)}(k \mid k)\right]$$

wherein $X^{(i)}(k \mid k)$ indicates an $i$th third sampling state obtained in the foregoing step 2. $k$ indicates that the current filtering process is a $k$th (i.e. a $k$th frame) iteration process. $X^{(i)}(k + 1 \mid k)$ indicates the third predicted state corresponding to the third sampling state obtained by prediction. Based on this, the third predicted state corresponding to each of the third sampling state(s) can be obtained.

4. Based on each of the third predicted state(s) and each of the third weight(s), a first predicted mean and a third covariance matrix are determined.

The first predicted mean $\hat{X}(k + 1 \mid k)$ and the third covariance matrix $P(k + 1 \mid k)$ can be expressed as follows:

$$\hat{X}(k+1 \mid k) = \sum_{i=0}^{2n} \omega_m^{(i)} X^{(i)}(k+1 \mid k)$$

$$P(k+1 \mid k) =$$

$$\sum_{i=0}^{2n} \omega_c^{(i)} \left[\hat{X}(k+1 \mid k) - X^{(i)}(k+1 \mid k)\right]\left[\hat{X}(k+1 \mid k) - X^{(i)}(k+1 \mid k)\right]^{\mathrm{T}} + Q$$

wherein $Q$ indicates a process noise.

5. A first Kalman gain is determined based on the first predicted mean and the third covariance matrix.

A pre-set quantity of sigma point(s) can be obtained by using the unscented transformation again based on the first predicted mean and the third covariance matrix, and a prediction observation amount is obtained in combination with an observation equation (which may also be referred to as a measurement equation), and then the first Kalman gain is determined based on the prediction observation amount. The observation equation can be expressed as follows:

$$Z(k) = h\big(X(k), V(k)\big)$$

wherein $X(k)$ indicates a state vector which may be, for example, a sigma point (sampling state) obtained using the unscented transformation again based on the first predicted mean and the third covariance matrix, $V(k)$ representing the observation noise. $h()$ indicates an observation function. $Z(k)$ indicates a prediction observation amount.

6. The first predicted mean is updated based on the first Kalman gain to obtain a first new state.

The first predicted mean may be updated based on a state update function to obtain the first new state.

At the same time, the third covariance matrix can also be updated to obtain a new covariance matrix.

7. A third ego vehicle state information is determined based on the first new state.

The speed, acceleration, yaw angle, yaw rate, lateral position and longitudinal position of the vehicle can be extracted from the first new state to obtain the third ego vehicle state information.

In some optional embodiments, determining the first Kalman gain based on the first predicted mean and the third covariance matrix may include: determining a pre-set quantity of fifth sampling state(s) by using the unscented transformation manner based on the first predicted mean and the third covariance matrix; determining first prediction observation amount respectively corresponding to each of the fifth sampling state(s) based on a first filtering observation function; determining a fifth covariance matrix based on each of the first prediction observation amounts and each of the third weights; and determining the first Kalman gain based on the fifth covariance matrix.

The determination principle of the fifth sampling state is similar to the above-mentioned third sampling state, and can be expressed as follows:

$$\begin{cases} X^{(0)}(k+1) = \hat{X}(k+1 \mid k), \ i = 0 \\ X^{(i)}(k+1) = \hat{X}(k+1 \mid k) + \left(\sqrt{(n+\lambda)P(k+1 \mid k)}\right)_i, \ i = 1,2,\dots,n \\ X^{(i)}(k+1) = \hat{X}(k+1 \mid k) - \left(\sqrt{(n+\lambda)P(k+1 \mid k)}\right)_i, \ i = n+1, n+2,\dots,2n \end{cases}$$

Each of the fifth sampling states is brought into the observation equation (namely, the first filtering observation function) to obtain a first prediction observation amount $Z^{(i)}(k+1 \mid k)$ respectively corresponding to each of the fifth sampling states, which can be expressed as follows:

$$Z^{(i)}(k+1 \mid k) = h\big[X^{(i)}(k+1)\big]$$

The fifth covariance matrix includes an observation covariance matrix $P_{z_k z_k}$ and a covariance matrix $P_{x_k z_k}$ between the state and the observation, which can be expressed as follows:

$$\bar{Z}(k + 1 \mid k) = \sum_{i=0}^{2n} \omega_m^{(i)} Z^{(i)}(k + 1 \mid k)$$

$$P_{z_k z_k} =$$

$$\sum_{i=0}^{2n} \omega_c^{(i)} \big[Z^{(i)}(k + 1 \mid k) - \bar{Z}(k + 1 \mid k)\big]\big[Z^{(i)}(k + 1 \mid k) - \bar{Z}(k + 1 \mid k)\big]^{T} + R$$

$$P_{x_k z_k} = \sum_{i=0}^{2n} \omega_c^{(i)} \big[X^{(i)}(k + 1) - \bar{Z}(k + 1 \mid k)\big]\big[Z^{(i)}(k + 1 \mid k) - \bar{Z}(k + 1 \mid k)\big]^{T}$$

wherein $\bar{Z}(k + 1 \mid k)$ indicates the predicted observation mean and $R$ indicates the observation noise, namely, $V(k)$ described above.

The first Kalman gain $K(k + 1)$ may be expressed as follows:

$$K(k + 1) = P_{x_k z_k} P_{z_k z_k}^{-1}$$

Then the updated first new state $\hat{X}(k + 1 \mid k + 1)$ may be represented as follows:

$$\hat{X}(k + 1 \mid k + 1) = \hat{X}(k + 1 \mid k) + K(k + 1)[Z(k + 1) - \bar{Z}(k + 1 \mid k)]$$

wherein $X(k + 1 \mid k)$ indicates a first predicted mean and $Z(k + 1)$ indicates an actual observation amount based on the sensor data. $K(k + 1)$ indicates the first Kalman gain. $\bar{Z}(k + 1 \mid k)$ indicates the predicted observation mean.

Meanwhile, a new covariance matrix (which may be referred to as a first new covariance matrix) $P(k + 1 \mid k + 1)$ obtained by updating the third covariance matrix $P(k + 1 \mid k)$ may be expressed as follows:

$$P(k + 1 \mid k + 1) = P(k + 1 \mid k) - K(k + 1)P_{z_k z_k} K^{T}(k + 1)$$

wherein $K^{T}(k + 1)$ represents a transpose of $K(k + 1)$.

The new covariance matrix can be used as an initial noise of a position probability distribution information prediction process of the ego vehicle.

In this embodiment, the unscented Kalman filtering manner is used to realize the noise reduction processing of the ego vehicle state information, such that the linearization of a nonlinear system of the vehicle state can be avoided. Compared with an extended Kalman filtering manner, the unscented Kalman filtering manner can avoid or reduce a linearization error caused by a first-order Taylor expansion, such that the noise reduction effect can be further improved.

In some optional embodiments, the performing noise reduction processing on the second obstacle state information based on an unscented Kalman filtering manner to obtain the third obstacle state information may include:

1. An obstacle state vector is determined based on the second obstacle state information.

2. An unscented transformation is performed on the obstacle state vector to obtain a pre-set quantity of fourth sampling states and a fourth weight respectively corresponding to each of the fourth sampling states.

3. A fourth predicted state respectively corresponding to each of the fourth sampling states is determined based on a second filtering state transition function.

4. Based on each of the fourth predicted states and each of the fourth weights, a second predicted mean and a fourth covariance matrix are determined.

5. A second Kalman gain is determined based on the second predicted mean and the fourth covariance matrix.

6. The second predicted mean is updated based on the second Kalman gain to obtain a second new state.

Meanwhile, the fourth covariance matrix may also be updated to obtain a new covariance matrix (which may be referred to as a second new covariance matrix). The new covariance matrix can be used as an initial noise of a position probability distribution information prediction process of the obstacle.

7. A third obstacle state information is determined based on the second new state.

In some optional embodiments, determining the second Kalman gain based on the second predicted mean and the fourth covariance matrix may include: determining a pre-set quantity of sixth sampling states by using the unscented transformation based on the second predicted mean and the fourth covariance matrix; determining second prediction observation amount respectively corresponding to each of the sixth sampling states based on a second filtering observation function; determining a sixth covariance matrix based on each of the second prediction observation amounts and each of the fourth weights; and determining the second Kalman gain based on the sixth covariance matrix.

The noise reduction process of the second obstacle state information is similar to the noise reduction process of the second ego vehicle state information described above, and will not be described in detail herein.

In some optional embodiments, before the performing noise reduction processing on the second ego vehicle state information based on an unscented Kalman filtering to obtain the third ego vehicle state information, the method may further include: performing data cleaning on the second ego vehicle state information to obtain the cleaned ego vehicle state information; and performing data cleaning on the second obstacle state information to obtain the cleaned obstacle state information.

The data cleaning may include filtering out repeated, erroneous and inconsistent information so as to improve the data quality of the state information. The repeated information may include repeatedly acquired obstacle information. The erroneous information may include an occurrence of a non-compliant jump condition of kinematic information due to a sudden change of the obstacle type. The inconsistent information may include, for example, that the length and width of the obstacle are not practical.

The performing noise reduction processing on the second ego vehicle state information based on an unscented Kalman filtering to obtain the third ego vehicle state information may include: performing filtering processing on the cleaned ego vehicle state information based on the unscented Kalman filtering to obtain the third ego vehicle state information.

The performing noise reduction processing on the second obstacle state information based on an unscented Kalman filtering to obtain the third obstacle state information may include: performing filtering processing on the cleaned obstacle state information based on the unscented Kalman filtering to obtain the third obstacle state information.

By performing data cleaning on the second ego vehicle state information and the second obstacle state information to obtain the cleaned state information, the present embodiment can further improve the quality of the state information, and further can improve the accuracy and robustness of the result of subsequent filtering and noise reduction processing.

In some optional embodiments, the step 2012 of performing noise reduction processing on the second ego vehicle state information and the second obstacle state information to obtain the noise-reduced third ego vehicle state information and third obstacle state information may include:
determining whether at least one of the second ego vehicle state information and the second obstacle state information satisfies a state of a Gaussian distribution; and in response to at least one of the second ego vehicle state information and the second obstacle state information not satisfying the Gaussian distribution, performing, based on a particle filtering manner, noise reduction processing on the second ego vehicle state information and the second obstacle state information to obtain the noise-reduced third ego vehicle state information and the third obstacle state information.

A certain distribution detection method can be used to determine whether the second ego vehicle state information and the second obstacle state information satisfy the state of the Gaussian distribution. The state may include satisfaction and non-satisfaction, and if the second ego vehicle state information and the second obstacle state information satisfy the Gaussian distribution, noise reduction processing may be performed on the second ego vehicle state information and the second obstacle state information in the above-mentioned unscented Kalman filtering. If at least one of the second ego vehicle state information and the second obstacle state information does not satisfy the Gaussian distribution, based on a particle filtering, noise reduction processing is performed on the second ego vehicle state information and the second obstacle state information to obtain the noise-reduced third ego vehicle state information and the third obstacle state information. Particle filtering can approximate a probability density function by finding a group of random samples propagating in a state space, without linear assumption and Gaussian assumption of posterior probability. The particle filtering replaces integral operation with sample mean, so as to obtain a minimum variance distribution of the state.

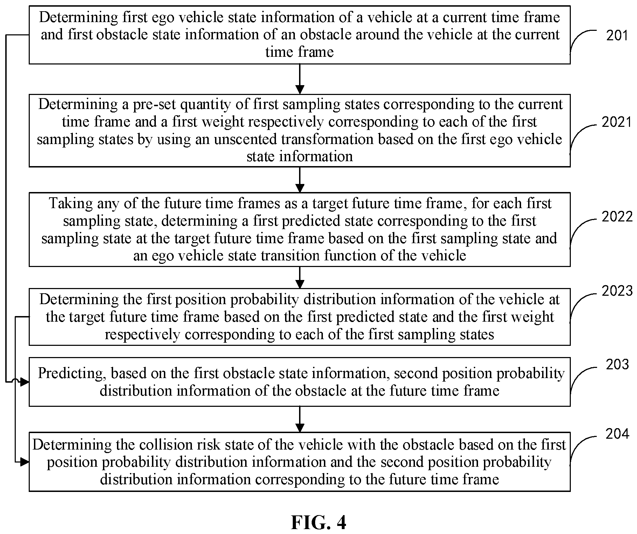

FIG. 4 is a schematic flow diagram of a method for determining a collision risk state in accordance with yet another exemplary embodiment of the present disclosure.

In some optional embodiments, as shown in FIG. 4, the step 202 of predicting, based on the first ego vehicle state information, first position probability distribution information corresponding to the vehicle at a future time frame includes:

In step 2021, determining a pre-set quantity of first sampling states corresponding to the current time frame and a first weight respectively corresponding to each of the first sampling states by using an unscented transformation based on the first ego vehicle state information.

wherein each first sampling state $X'^{(i)}$ can be represented as follows:

$$\begin{cases} X'^{(0)} = \hat{X}(k+1\mid k+1), \;\; i = 0 \\ X'^{(i)} = \hat{X}(k+1\mid k+1) + \left(\sqrt{(n+\lambda)P(k+1\mid k+1)}\right)_i, \;\; i = 1,2,\dots,n \\ X'^{(i)} = \hat{X}(k+1\mid k+1) - \left(\sqrt{(n+\lambda)P(k+1\mid k+1)}\right)_i, \;\; i = n+1, n+2, \dots, 2n \end{cases}$$

wherein $\hat{X}(k+1\mid k+1)$ indicates a state vector (namely, the above-mentioned first new state) determined by the first ego vehicle state information, and $P(k+1\mid k+1)$ indicates the above-mentioned first new covariance matrix. Other symbols are the same as previously described. The parameter determining the first weight may be the same as that in determining the above-mentioned third weight, and therefore, the first weight may be the same as the above-mentioned third weight.

In step 2022, taking any one of the future time frames as a target future time frame, for each first sampling state, determining a first predicted state corresponding to the first sampling state at the target future time frame based on the first sampling state and an ego vehicle state transition function of the vehicle.

In some optional embodiments, each of the future time frames may be traversed, and each of the future time frames performs a subsequent operation as the target future time frame. A first predicted state corresponding to each of the first sampling states at the target future time frame respectively is determined based on each of the first sampling states and an ego vehicle state transition function (which may also be referred to as an ego vehicle state transition equation) of the vehicle.

In some optional embodiments, the ego vehicle state transition function may be set based on changes in vehicle motion state. Any one of the first sampling state(s) may be represented as follows:

$$X'_t = [a_t \quad V_t \quad \theta_t \quad \dot{\theta}_t \quad x_t \quad y_t]^T$$

wherein $a_t$ indicates an acceleration, $V_t$ indicates a velocity, $\theta_t$ indicates a yaw angle, $\dot{\theta}_t$ indicates a yaw rate, $x_t$ indicates a longitudinal position coordinate, and $y_t$ indicates a lateral position coordinate.

Then, the ego vehicle state transition function may be expressed as follows:

$$\begin{bmatrix} \hat{a}_j \\ \hat{V}_j \\ \hat{\theta}_j \\ \hat{\dot{\theta}}_j \end{bmatrix} = \begin{bmatrix} 1 & 0 & 0 & 0 \\ j\Delta T & 1 & 0 & 0 \\ 0 & 0 & 1 & j\Delta T \\ 0 & 0 & 0 & 1 \end{bmatrix} \cdot \begin{bmatrix} a_t \\ V_t \\ \theta_t \\ \dot{\theta}_t \end{bmatrix} + \begin{bmatrix} j\Delta T & 0 \\ \frac{(j\Delta T)^2}{2} & 0 \\ 0 & \frac{(j\Delta T)^2}{2} \\ 0 & j\Delta T \end{bmatrix} \cdot \begin{bmatrix} J_t \\ \dot{\omega}_t \end{bmatrix}$$

$$\hat{x}_j = x_t + \sin\left(\theta_t + \dot{\theta}_t j\Delta T + \dot{\omega}_t \frac{(j\Delta T)^2}{2}\right)\left(V_t + \frac{a_t j\Delta T}{2} + J_t \frac{(j\Delta T)^2}{3}\right) j\Delta T$$

$$\hat{y}_j = y_t + \cos\left(\theta_t + \dot{\theta}_t j\Delta T + \dot{\omega}_t \frac{(j\Delta T)^2}{2}\right)\left(V_t + \frac{a_t j\Delta T}{2} + J_t \frac{(j\Delta T)^2}{3}\right) j\Delta T$$

wherein $t$ indicates a current time frame, and $j$ indicates a $j$th future time frame (namely, the target future time frame).

$$\widehat{X}'_j = \begin{bmatrix} \hat{a}_j & \hat{V}_j & \hat{\theta}_j & \hat{\dot{\theta}}_j & \hat{x}_j & \hat{y}_j \end{bmatrix}^T$$ indicates the first predicted state of a $j$th ($j$ = 1,2, ..., $N$, wherein $N$ indicates a quantity of future time frame(s)) future time frame. $J_t$ indicates a change rate of the acceleration, $\dot{\omega}_t$ indicates a change rate of the yaw rate, and $\Delta T$ indicates a time step, i.e. a time interval between two adjacent time frames.

Based on the above-mentioned ego vehicle state transition function, the first predicted state corresponding to each of the first sampling states at the target future time frame can be obtained.

In step 2023, determining the first position probability distribution information of the vehicle at the target future time frame based on the first predicted state and the first weight respectively corresponding to each of the first sampling states.

The first position probability distribution information may include a first position mean and a first position variance. The first position mean and the first position variance of the vehicle at the target future time frame may be calculated based on the first predicted state and the first weight respectively corresponding to each of the first sampling states to obtain the first position probability distribution information.

The present embodiment achieves effective prediction of position probability distribution information of the vehicle in the future time frame in combination with the state transition function of the vehicle via the unscented transformation, can obtain an initial noise situation from the ego vehicle state information and a noise situation in the prediction process of the position probability distribution information, and can embody the noise situation in the prediction result of the position probability distribution information, such that the prediction result can tolerate system noise and thus has better robustness.

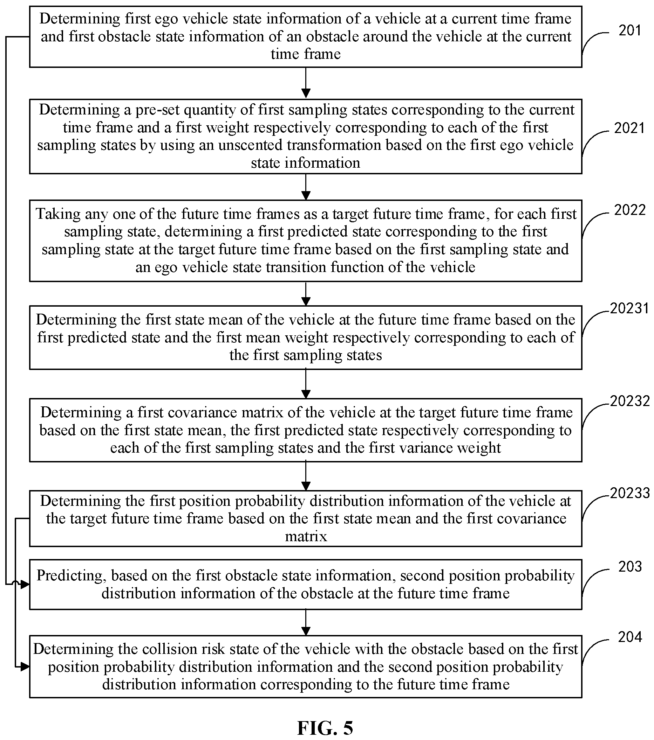

FIG. 5 is a schematic flow diagram of a method for determining a collision risk state in accordance with yet another exemplary embodiment of the present disclosure.

In some optional embodiments, the first weight includes a first mean weight and a first variance weight. For the first mean weight, reference may be made to the foregoing $\omega_{\mathrm{m}}^{(i)}$, and for the first variance weight, reference may be made to the foregoing $\omega_{\mathrm{c}}^{(i)}$, which will not be described in detail.

As shown in FIG. 5, the step 2023 of determining the first position probability distribution information of the vehicle at the target future time frame based on the first predicted state and the first weight respectively corresponding to each of the first sampling states may include:

In step 20231, determining the first state mean of the vehicle at the future time frame based on the first predicted state and the first mean weight respectively corresponding to each of the first sampling states.

A first state mean $\hat{X}'_j(t + 1 \mid t)$ of the vehicle at the target future time frame can be expressed as follows:

$$\widehat{X}'_j(t + 1 \mid t) = \sum_{i=0}^{2n} \omega_m^{(i)} \widehat{X}'_j^{(i)}$$

wherein $\hat{X}'_j^{(i)}$ indicates the first predicted state corresponding to an ith first sampling state at the target future time frame. $\omega_m^{(i)}$ indicates a first mean weight.

In step 20232, determining a first covariance matrix of the vehicle at the target future time frame based on the first state mean, the first predicted state respectively corresponding to each of the first sampling states and the first variance weight.

The first covariance matrix $P(t + 1 \mid t)$ can be expressed as follows:

$$P(t + 1 \mid t) =$$

$$\sum_{i=0}^{2n} \omega_c^{(i)} \left[ \widehat{X}'_j(t + 1 \mid t) - \widehat{X}'_j^{(i)} \right] \left[ \widehat{X}'_j(t + 1 \mid t) - \widehat{X}'_j^{(i)} \right]^{\mathrm{T}} + Q$$

wherein $Q$ indicates a process noise. $\omega_c^{(i)}$ indicates a first variance weight.

In step 20233, determining the first position probability distribution information of the vehicle at the target future time frame based on the first state mean and the first covariance matrix.

A lateral position mean and a longitudinal position mean can be extracted from the first state mean to obtain a first position mean of the vehicle at the target future time frame. A lateral position variance and a longitudinal position variance can be extracted from the first covariance matrix to obtain a first position variance of the vehicle at the target future time frame. The first position mean and the first position variance are determined as the first position probability distribution information.

According to the above-mentioned process, taking any one of the future time frames as the target time frame, the first position probability distribution information respectively of the vehicle at each of the future time frames (i.e., the target time frame) can be obtained.

The present embodiment can effectively determine the position probability distribution information about the vehicle at each of the future time frames by determining the state mean and the covariance matrix of the vehicle at each of the future time frames, and since the process noise can be considered in determining the covariance matrix, an adverse effect of the noise on the prediction result can be avoided or reduced, thereby improving the accuracy and validity of the collision risk state.

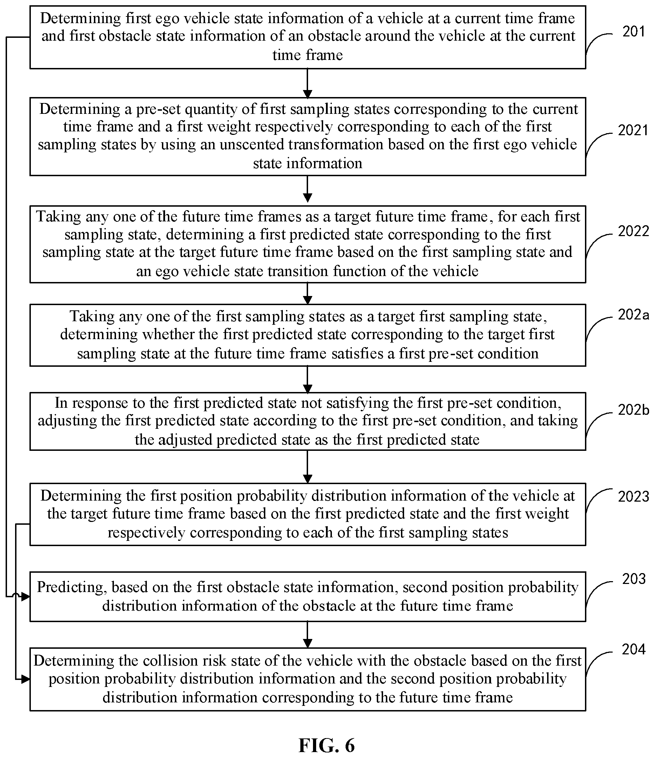

FIG. 6 is a schematic flow diagram of a method for determining a collision risk state in accordance with yet another exemplary embodiment of the present disclosure.

In some optional embodiments, after determining a first predicted state corresponding to each of the first sampling states at the target future time frame respectively based on each of the first sampling states and an ego vehicle state transition function of the vehicle, the method further includes:

In step 202a, taking any one of the first sampling states as a target first sampling state, determining whether the first predicted state corresponding to the target first sampling state at the future time frame satisfies a first pre-set condition.

Here, the first pre-set condition may be set according to a handling stability of the vehicle and the actual performance of the vehicle and the corresponding state (also referred to "a first pre-set condition state") means a state in which the first pre-set condition may be satisfied. For example, the first pre-set condition may include a vehicle velocity condition, an acceleration condition, a yaw angle condition, a yaw rate condition, a lateral-longitudinal position change condition, etc.

In some optional embodiments, the vehicle velocity condition may include the velocity of the vehicle matching an actual travel segment and a velocity limit of the vehicle. For example, when the vehicle is traveling on a muddy road, the velocity of the vehicle may not exceed a certain limit (which may be expressed as $v_{boundary}$), otherwise, a case where the vehicle is liable to slip and lose stability may occur. The velocity limit $v_{boundary}$ can be expressed as follows:

$$v_{boundary} = \sqrt{a_{limit} \cdot R}$$

wherein $a_{limit}$ indicates a sidewise acceleration limit, and $R$ indicates a turning radius of the vehicle during turning, that is, a radius of curvature of a vehicle traveling trajectory. $a_{limit}$ may be represented as follows:

$$a_{limit} = \mu g$$

wherein $\mu$ indicates a coefficient of grip of a vehicle tyre, and a magnitude of $\mu$ depends on a road condition and a type of the tyre, which can be determined from data in accordance with the tyre manufacturer or using standard values. $g$ indicates the acceleration of gravity on the earth, 9.8 m/s$^2$.

In some optional embodiments, the acceleration conditions may include that the acceleration of the vehicle needs to be within the acceleration limit described above to ensure stability of vehicle travel. A lower limit of the brake acceleration may be determined according to a maximum brake deceleration $a_{brake}$ actually deliverable by the brake system.

In some optional embodiments, the yaw angle condition may include a change condition in the yaw angle of the vehicle within a limit value. The vehicle yaw angle situation may be determined in connection with the actual situation of the road. For example, the limit value of the vehicle yaw angle may be calculated according to lane line or road boundary situations to ensure that the predicted yaw angle is within the limit value.

In some optional embodiments, the yaw rate condition may include that the change in the yaw rate satisfies continuity. The yaw rate is a first order quantity of the yaw angle, a tolerance coefficient $p$ can be set, and a current yaw rate threshold range is determined based on the tolerance coefficient, such that the yaw rate of the vehicle at a next moment should be within the current yaw rate threshold range, so as to ensure the stability of vehicle traveling. It may be represented as follows:

$$\dot{\theta}(t) \in \left[(1-p)\dot{\theta}(t-1), (1+p)\dot{\theta}(t-1)\right]$$

wherein $\dot{\theta}(t-1)$ indicates the yaw rate at a moment of $t-1$. $\dot{\theta}(t)$ indicates the yaw rate at a moment of $t$.

In some optional embodiments, the lateral-longitudinal position change condition may include that the lateral-longitudinal position of the vehicle cannot exceed a road boundary line or interfere with other objects, such as street signs, stairs, etc.

In step 202b, in response to the first predicted state not satisfying the first pre-set condition, adjusting the first predicted state based on the first pre-set condition to take the adjusted predicted state as the first predicted state.

If the first predicted state satisfies a first pre-set condition, the first predicted state can be used for subsequent processing. If the first predicted state does not satisfy the first pre-set condition, the first predicted state may be adjusted according to the first pre-set condition such that the adjusted predicted state satisfies the first pre-set condition, and the adjusted predicted state is taken as the first predicted state for determining the first position probability distribution information. The specific adjustment method can be determined according to the above-mentioned velocity condition, acceleration condition, yaw angle condition, yaw rate condition and lateral and longitudinal position condition. For example, if the acceleration exceeds a corresponding boundary value, the acceleration is adjusted to a value within a boundary value range, for example, to the boundary value or a value smaller than the boundary value, to ensure the traveling stability of the vehicle on the predicted trajectory. Other conditions are not described in detail.

By judgment of the first predicted state of the ego vehicle obtained by the prediction, in the situation where the first predicted state does not satisfy a constraint of the first pre-set condition, the present embodiment can adjust the first predicted state to satisfy the constraint of the first pre-set condition, thereby making the predicted trajectory more consistent with the vehicle traveling stability and the vehicle performance requirements, and further improving the validity of the probability position distribution information.

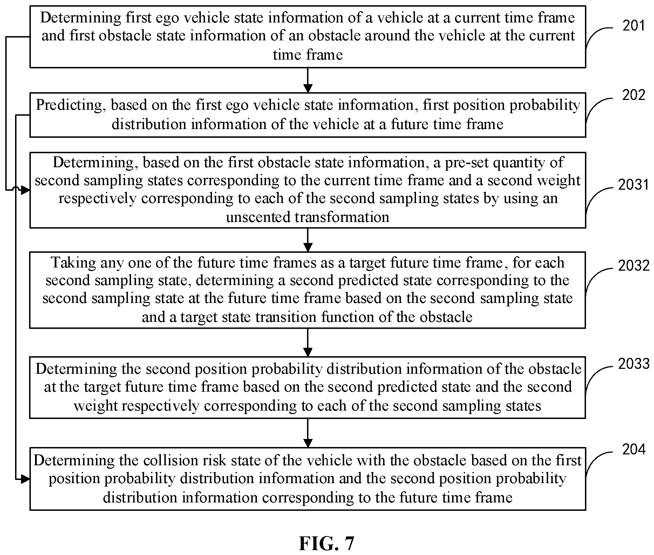

FIG. 7 is a schematic flow diagram of a method for determining a collision risk state in accordance with yet another exemplary embodiment of the present disclosure.

In some optional embodiments, as shown in FIG. 7, the step 203 of predicting second position probability distribution information of the obstacle at each future time frame respectively based on the first obstacle state information may include:

In step 2031, determining, based on the first obstacle state information, a pre-set quantity of second sampling states corresponding to the current time frame and a second weight respectively corresponding to each of the second sampling states by using an unscented transformation.

Here, the second sampling state and the second weight are determined in a manner similar to that of the first sampling state and the first weight described above, and will not be described in detail.

In step 2032, taking any one of the future time frames as a target future time frame, for each second sampling state, determining a second predicted state corresponding to the second sampling state at the future time frame based on the second sampling state and a target state transition function of the obstacle.

Different types of obstacles may correspond to different state transition functions. The obstacle type may include a vehicle type, a pedestrian type, a two-wheeled vehicle type, etc. Here, the state transition functions of the obstacles of the vehicle type, the pedestrian type, and the two-wheeled vehicle type may be different.

In some optional embodiments, the obstacle state information may include a type of the obstacle. Alternatively, the obstacle type may be predicted additionally. It is not specifically limited.

In some optional embodiments, where the target state transition function of the obstacle is determined, the specific operation of determining the second predicted state corresponding to each of the second sampling states at the target future time frame respectively is similar to that of the first predicted state described above for the ego vehicle and will not be described in detail herein.

In step 2033, determining the second position probability distribution information of the obstacle at the target future time frame based on the second predicted state and the second weight respectively corresponding to each of the second sampling states.

The specific operation of determining the second position probability distribution information can be referred to the above-mentioned operation of determining the first position probability distribution information in step 2023 and the specific process from step 20231 to step 20233, which will not be described in detail herein.

In this embodiment, an effective prediction of the position probability distribution information about the obstacle at the future time frame is realized in combination with the target state transition equation of the obstacle via the unscented transformation, and the initial noise situation of the obstacle state information and the noise situation in the prediction process of the position probability distribution information can be obtained, and the noise is embodied in the prediction result, such that the prediction result can tolerate the corresponding system noise and thus has better robustness.

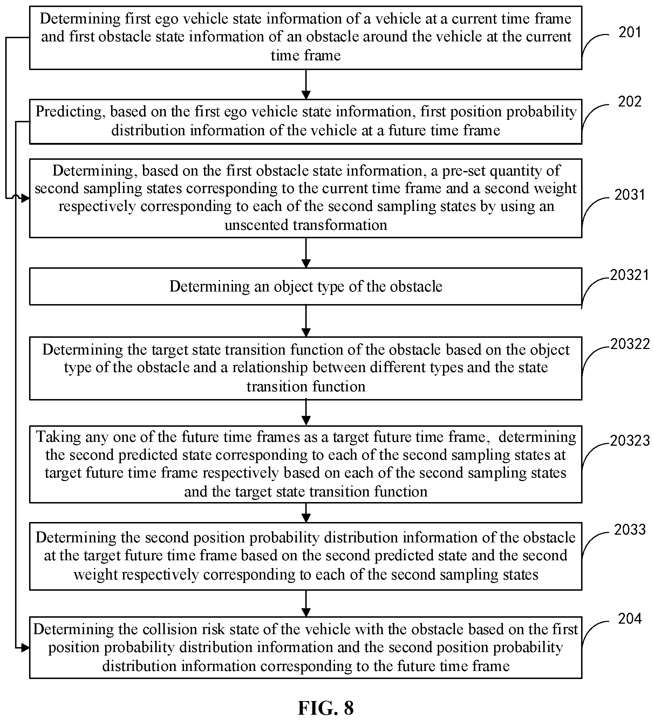

FIG. 8 is a schematic flow diagram of a method for determining a collision risk state in accordance with yet another exemplary embodiment of the present disclosure.

In some optional embodiments, the step 2032 of determining a second predicted state corresponding to each of the second sampling states at the target future time frame respectively based on each of the second sampling states and a target state transition function of the obstacle may include:
In step 20321, determining an object type of the obstacle.

If the first obstacle state information includes type information about the obstacle, the object type of the obstacle may be determined based on the first obstacle state information. If the first obstacle state information does not include the type information about the obstacle, the object type of the obstacle can be identified based on an obstacle type detection network, and the method for specifically determining the object type of the obstacle can be set according to actual requirements.

In step 20322, determining the target state transition function of the obstacle based on the object type of the obstacle and a relationship between different types and the state transition function.

A corresponding state transition function can be set for different obstacle types in advance, and a relationship (such as corresponding) between the type and the state transition function can be recorded. During traveling of the vehicle, the target state transition function of the obstacle can be determined according to the specific object type of the obstacle and a corresponding relationship between a recorded type and the state transition function. For example, the vehicle type corresponds to a first state transition function, a pedestrian type corresponds to a second state transition function, and a two-wheeled vehicle type corresponds to a third state transition function, etc.

In some optional embodiments, for other types of obstacles than the vehicle type, the pedestrian type, and the two-wheeled vehicle type, the target state transition functions corresponding to the other types of obstacles may be determined from the first state transition function, the second state transition function, and the third state transition function according to the fact that a size of the obstacle is similar to sizes of the obstacles of the vehicle type, the pedestrian type, and the two-wheeled vehicle type described above.

In some optional embodiments, the first state transition function corresponding to a vehicle-type obstacle may be identical to the ego vehicle state transition function described above, and will not be described in detail herein.

In some optional embodiments, the second sampling state of the obstacle of the pedestrian type may be represented as follows:

$$X'_t = \begin{bmatrix} a_{x\_t} & a_{y\_t} & V_{x\_t} & V_{y\_t} & x_t & y_t \end{bmatrix}^T$$

Then the second state transition function of the obstacle of the pedestrian type can be expressed as follows:

$$\begin{bmatrix} \hat{a}_{x\_j} \\ \hat{a}_{y\_j} \\ \hat{V}_{x\_j} \\ \hat{V}_{y\_j} \end{bmatrix} = \begin{bmatrix} 1 & 0 & 0 & 0 \\ 0 & 1 & 0 & 0 \\ j\Delta T & 0 & 1 & 0 \\ 0 & j\Delta T & 0 & 1 \end{bmatrix} \cdot \begin{bmatrix} a_{x\_t} \\ a_{y\_t} \\ V_{x\_t} \\ V_{y\_t} \end{bmatrix} + \begin{bmatrix} j\Delta T & 0 \\ j\Delta T & 0 \\ 0 & \frac{(j\Delta T)^2}{2} \\ 0 & \frac{(j\Delta T)^2}{2} \end{bmatrix} \cdot \begin{bmatrix} J_{x\_t} \\ J_{y\_t} \end{bmatrix}$$

$$\hat{x}_j = x_t + \left( V_{x\_t} + \frac{a_{x\_t} j\Delta T}{2} + J_{x\_t} \frac{(j\Delta T)^2}{3} \right) j\Delta T$$

$$\hat{y}_j = y_t + \left( V_{y\_t} + \frac{a_{y\_t} j\Delta T}{2} + J_{y\_t} \frac{(j\Delta T)^2}{3} \right) j\Delta T$$

wherein $t$ indicates the current time frame, $j$ indicates a $j$th future time frame (namely, the target future time frame), $\Delta T$ indicates a time step, $a_{x\_t}$ indicates an obstacle longitudinal acceleration, $a_{y\_t}$ indicates an obstacle lateral acceleration, $V_{x\_t}$ indicates an obstacle longitudinal speed, $x_t$ indicates an obstacle longitudinal position coordinate, and $y_t$ indicates an obstacle lateral position coordinate. $\hat{X}'_j = [\hat{a}_{x\_j} \, \hat{a}_{y\_j} \, \hat{V}_{x\_j} \, \hat{V}_{y\_j} \, \hat{x}_j \, \hat{y}_j]^T$ indicates the second predicted state of a $j$th ($j = 1,2, ..., N$, wherein $N$ indicates a quantity of future time frames) future time frame. $J_{x\_t}$ indicates a change rate of a longitudinal acceleration. $J_{y\_t}$ indicates a change rate of a lateral acceleration. It can be seen that, due to the large difference in length, width, size and motion state between pedestrian type obstacles and vehicle type obstacles, and the small pedestrian detection frame, it is not easy to identify obvious directivity of the pedestrian type obstacles with respect to vehicle type obstacles, and the calculated yaw angle and yaw rate deviation of the pedestrian type are large. Therefore, using the above-mentioned state transition equation more suitable for the pedestrian type is helpful to improve the accuracy and validity of the prediction results of a future state of the obstacles.

In some optional embodiments, the second sampling state of the obstacle of the two-wheeled vehicle type may be represented as follows:

$$X'_t = \begin{bmatrix} a_{x\_t} & a_{y\_t} & V_{x\_t} & V_{y\_t} & \theta_t & \dot{\theta}_t & x_t & y_t \end{bmatrix}^T$$

Then the third state transition function of the obstacle of the two-wheeled vehicle type can be expressed as follows:

$$\begin{bmatrix} \hat{a}_{x\_j} \\ \hat{a}_{y\_j} \\ \hat{V}_{x\_j} \\ \hat{V}_{y\_j} \\ \hat{\theta}_j \\ \hat{\dot{\theta}}_j \end{bmatrix} = \begin{bmatrix} 1 & 0 & 0 & 0 \\ 0 & 1 & 0 & 0 \\ j\Delta T & 0 & 1 & 0 \\ 0 & j\Delta T & 0 & 1 \\ 0 & 0 & 1 & j\Delta T \\ 0 & 0 & 0 & 1 \end{bmatrix} \cdot \begin{bmatrix} a_{x\_t} \\ a_{y\_t} \\ V_{x\_t} \\ V_{y\_t} \\ \theta_t \\ \dot{\theta}_t \end{bmatrix} + \begin{bmatrix} j\Delta T & 0 & 0 \\ j\Delta T & 0 & 0 \\ 0 & \frac{(j\Delta T)^2}{2} & 0 \\ 0 & \frac{(j\Delta T)^2}{2} & 0 \\ 0 & 0 & \frac{(j\Delta T)^2}{2} \\ 0 & 0 & j\Delta T \end{bmatrix} \cdot \begin{bmatrix} J_{x\_t} \\ J_{y\_t} \\ \dot{\omega}_t \end{bmatrix}$$

Manner 1

$$\hat{x}_j = x_t + \left( V_{x\_t} + \frac{a_{x\_t} j\Delta T}{2} + J_{x\_t} \frac{(j\Delta T)^2}{3} \right) j\Delta T$$

$$\hat{y}_j = y_t + \left( V_{y\_t} + \frac{a_{y\_t} j\Delta T}{2} + J_{y\_t} \frac{(j\Delta T)^2}{3} \right) j\Delta T$$

wherein $t$ indicates the current time frame, $j$ indicates a $j$th future time frame (namely, the target future time frame), $\Delta T$ indicates the time step, $a_{x\_t}$ indicates the obstacle longitudinal acceleration, $a_{y\_t}$ indicates the obstacle lateral acceleration, $V_{x\_t}$ indicates an obstacle longitudinal speed, $\theta_t$ indicates an obstacle yaw angle, $\dot{\theta}_t$ indicates an obstacle yaw rate, $x_t$ indicates an obstacle longitudinal position coordinate, and $y_t$ indicates an obstacle lateral position coordinate. $\hat{X}'_j =$

$$\begin{bmatrix} \hat{a}_{x\_j} & \hat{a}_{y\_j} & \hat{V}_{x\_j} & \hat{V}_{y\_j} & \hat{\theta}_j & \hat{\dot{\theta}}_j & \hat{x}_j & \hat{y}_j \end{bmatrix}^T$$

indicates the second predicted state of a jth ($j$ = 1, 2, ..., $N$, wherein $N$ indicates a quantity of future time frames) future time frame. $J_{x\_t}$ indicates a change rate of a longitudinal acceleration $a_{x\_t}$. $J_{y\_t}$ indicates a change rate of a lateral acceleration $a_{y\_t}$. $\dot{\omega}_t$ indicates a change rate of the yaw rate $\dot{\theta}_t$. Because of the large difference in the length and width of the two-wheeled vehicle type, if the two-wheeled vehicle travels towards ego vehicle, the monitoring of the two-wheeled vehicles may be similar to that of the pedestrian type, and if the two-wheeled vehicle traverses with respect to an ego vehicle, the monitoring of the two-wheeled vehicles may be similar to that of the vehicle type. Based on the two situations, the above-mentioned state transition equation, which is more suitable for the two-wheeled vehicles, is used to predict the state of the two-wheeled vehicles in the future time frame, which helps to further improve the accuracy and validity of the obstacle state prediction result.

In some optional embodiments, for an obstacle of the two-wheeled vehicle type, a composite acceleration $a_t$ and a composite velocity $V_t$ may also be calculated, and a lateral-longitudinal position change (i.e. Manner II) is calculated based on the composite acceleration and the composite velocity, which may be expressed as follows:

$$a_t = \sqrt{a_{x\_t}^2 + a_{y\_t}^2}$$

$$V_t = \sqrt{V_{x\_t}^2 + V_{y\_t}^2}$$

$$\hat{x}_j = x_t + \sin\left(\theta_t + \dot\theta_t j\Delta T + \dot\omega_t \frac{(j\Delta T)^2}{2}\right)\left(V_t + \frac{a_t j\Delta T}{2} + J_t \frac{(j\Delta T)^2}{3}\right)j\Delta T$$

$$\hat{y}_j = y_t + \cos\left(\theta_t + \dot\theta_t j\Delta T + \dot\omega_t \frac{(j\Delta T)^2}{2}\right)\left(V_t + \frac{a_t j\Delta T}{2} + J_t \frac{(j\Delta T)^2}{3}\right)j\Delta T$$

Here, the meaning of each symbol is as described above.

In practical applications, it is possible to determine which of the above-mentioned manners is adopted to calculate the lateral and longitudinal positions according to the traveling state of the two-wheeled vehicle relative to the ego vehicle. For example, if the two-wheeled vehicle travels toward the ego vehicle, the lateral and longitudinal positions are calculated using the above-mentioned manner I, otherwise, the lateral and longitudinal positions are calculated using the composite acceleration and composite velocity of the above-mentioned manner II.

In some optional embodiments, for other types, the state transition equations for other types of obstacles may be determined based on the length (L) and width (H) of the other types of obstacles, e.g. if L/H <1.5, and L <1 m, H <1 m, the second state transition function for the pedestrian type may be used to predict the future state. If 1.5 <L/H <3, and L <1 m, H <1 m, the first state transition function corresponding to the vehicle type is used to predict the future state. In other cases, the third state transition function corresponding to the two-wheeled vehicle type is used to predict the future state.

In step 20323, taking any one of the future time frames as a target future time frame, determining the second predicted state corresponding to each of the second sampling states at target future time frame respectively based on each of the second sampling states and the target state transition function.

Here, after determining the target state transition function of the obstacle, the determination of the second predicted state is similar to that of the first predicted state described above, and will not be described in detail.

In the present embodiment, the target state transition function of the obstacle is determined according to the object type of the obstacle, which is helpful to accurately predict the state of the obstacle at the future time frame by using the state transition function more suitable for the obstacle, so as to obtain the second predicted state. Since the state transition function comprehensively considers the actual situation of the obstacle, it is helpful to further improve the accuracy of the state prediction result of the obstacle at the future time frame; and the state transition function can comprehensively consider the situation of uniform variable velocity motion of the obstacle and the case where the acceleration and the yaw rate have a certain change rate (namely, there is a change rate of the acceleration and the yaw rate), such that the prediction accuracy can be improved, thereby improving the accuracy and validity of the collision risk state.

In some optional embodiments, the step 20321 of determining the object type of the obstacle may include: determining a first type of the obstacle using a classification network model based on perceptual sensor data at the current time frame; determining a confidence corresponding to the first type using a classification confidence prediction model based on the first state data of the obstacle; and determining the object type of the obstacle based on the first type and the confidence.

The classification network model may employ any implementable network model, such as a family model based on a convolutional neural network. For example, a classification network model based on Transformer can be used to determine a specific type (i.e. the first type) of an obstacle. For each obstacle there may be a corresponding first type. The first type may be any of a vehicle, a pedestrian, a two-wheeled vehicle, and others. For example, the first type of obstacle is a pedestrian. The classification confidence prediction model may employ any implementable network model and differs from at least one of a network architecture and a network parameter of the classification network model described above. For example, the classification confidence prediction model may employ a residual network (resnet) based prediction model for predicting a confidence (probability) that the obstacle belongs to the first type based on first obstacle state information. In combination with the confidence and the confidence threshold, it is determined whether the obstacle does belong to the first type. That is, the classification confidence prediction model is used to check the confidence of the first type of the classification network model prediction. If the first type is a vehicle, pedestrian or two-wheeled vehicle and the corresponding confidence is greater than a pre-set threshold, the type of obstacle may be determined to be the corresponding first type. Otherwise, the output obstacle type is other types. The pre-set threshold may be set according to actual prediction accuracy requirements, for example, the pre-set threshold may be set as 0.7, 0.8, etc. without limitation.

In this embodiment, the classification network model is used to predict the type of the obstacle, and the classification confidence prediction model is used to predict the confidence of the obstacle type, so as to verify the type predicted by the classification network model, which is helpful to further improve the accuracy of the obstacle type, and further improve the accuracy of the state transition function used, thereby further improving the accuracy and validity of the prediction result of the position probability distribution information in the future time frame.

In some optional embodiments, after determining the second predicted state corresponding to each of the second sampling states at the target future time frame respectively based on the target state transition function corresponding to each of the second sampling states and the obstacle, the method further includes: for any second predicted state, determining whether the second predicted state satisfies a second pre-set condition; and in response to the second predicted state not satisfying the second pre-set condition, adjusting the second predicted state based on the second pre-set condition, and taking the adjusted predicted state as the second predicted state.

The second pre-set condition can be set according to the specific situation of the obstacle. The second pre-set condition may include respective conditions corresponding to different types of obstacles. For example, the second pre-set condition may include a condition corresponding to the vehicle type, a condition corresponding to the pedestrian type, a condition corresponding to the two-wheeled vehicle type, etc. With regard to different obstacles, a second pre-set condition corresponding to the obstacle is used to judge whether the second predicted state satisfies the condition constraint.

In some optional embodiments, the second pre-set condition corresponding to the vehicle type is similar to the first pre-set condition of the above-mentioned ego vehicle and will not be described in detail herein.

In some optional embodiments, the second pre-set condition corresponding to the pedestrian type may include a pedestrian velocity condition, a pedestrian acceleration condition, and a pedestrian position change condition. The pedestrian velocity condition may include that the pedestrian velocity needs to comply with actual situations. For example, it may be determined whether the pedestrian is in a walking state or a running motion state. Whether the second predicted state satisfies the velocity condition is judged according to upper velocity limits corresponding to different states. For example, the upper velocity limit of the walking state is 5 m/s and the upper velocity limit of the running state is 15 m/s, and it is determined whether the second predicted state satisfies the velocity condition according to the comparison of the velocity in the second predicted state with the upper velocity limit. The acceleration condition may include that a pedestrian acceleration satisfies an acceleration upper and lower limit constraint, and the acceleration upper and lower limits may be determined according to any body function. For example, the upper and lower limits of the pedestrian acceleration is set to $\pm 5 m/s^2$. The position change condition is similar to that of the above-mentioned ego vehicle, and the pedestrian position change needs to be consistent with the actual situation of the road and not interfere with objects such as buildings.

In some optional embodiments, the second pre-set condition for the two-wheeled vehicle type may include a velocity condition, an acceleration condition, a position change condition, etc. The two-wheeled vehicle type can be subdivided into bicycles, electric bicycles and motorcycles, and different upper velocity limits can be set for different two-wheeled vehicles, for example as 10 m/s, 20 m/s, 40 m/s, respectively. Upper and lower acceleration limits of the two-wheeled vehicle may be determined according to the brake performance of the two-wheeled vehicle. For example, the upper and lower acceleration limits of a bicycle, an electric bicycle, and a motorcycle may be set to $\pm 5 m/s^2$, $\pm 7 m/s^2$, and $\pm 9 m/s^2$, respectively. The condition for the change of the position of the two-wheeled vehicle is similar to the judgment of the vehicle type, and needs to comply with the actual situation of the road and not interfere with objects such as buildings, etc. and a detailed description will not be given.

In some optional embodiments, the second pre-set condition may be simplified for other types of obstacles. For example, the second pre-set condition may include a position change condition, i.e. it may only be determined whether a change in position of other types of obstacles corresponds to an actual road situation.

In some optional embodiments, the adjustment principle for the second predicted state that does not satisfy the second pre-set condition is similar to that of the above-mentioned first predicted state, and will not be described in detail herein.

By judging whether the second predicted state of the obstacle satisfies the second pre-set condition, the present embodiment can adjust the second predicted state which does not satisfy the second pre-set condition, such that the second predicted state can be more consistent with the actual situation of the obstacle and ensure the stability of the movement of the obstacle, thereby helping to improve the validity of future state prediction result and further improving the accuracy of the collision risk state.

In some optional embodiments, after obtaining the first position probability distribution information of the ego vehicle at the future time frames and the second position probability distribution information of the obstacle at the future time frame, the first position probability distribution information and the second position probability distribution information may also be subjected to a data validity check. For example, whether the first position probability distribution information and the second position probability distribution information conform to a data format of [*position, variance*] is checked, *position* represents a horizontal and vertical position mean term, and *variance* represents a horizontal and vertical variance distribution term corresponding to *position.* Taking the first position probability distribution information as an example, for any future time frame, if the first position probability distribution information does not conform to the above-mentioned data format, it is determined that the first position probability distribution information is invalid. If it is determined that the first position probability distribution information and the second position probability distribution information for the future time frame are valid, the collision risk state between the vehicle and the obstacle is determined based on the first position probability distribution information and the second position probability distribution information respectively corresponding to the future time frame.

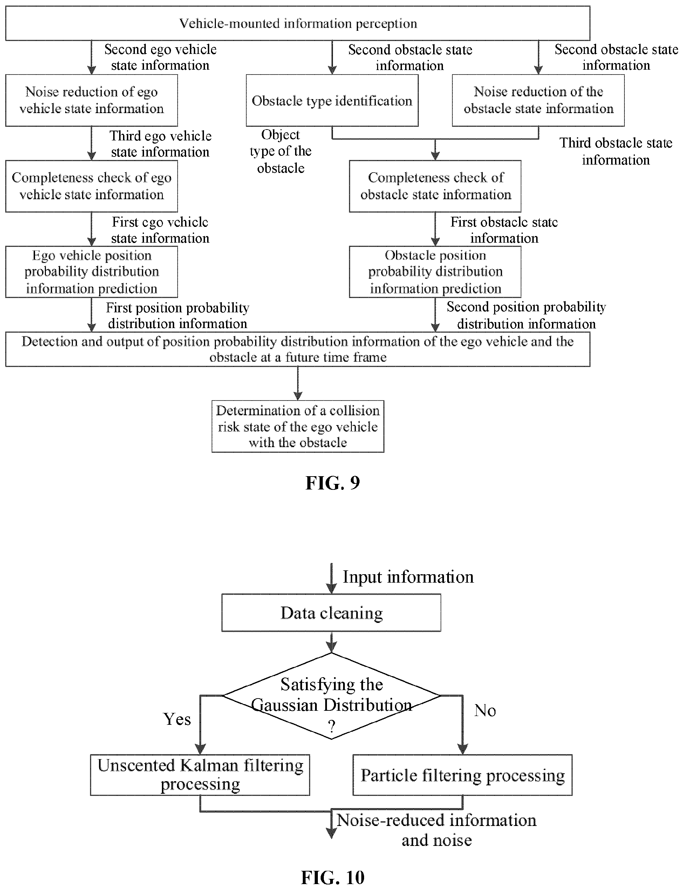

In some optional embodiments, FIG. 9 is a block flow diagram of a method for determining a collision risk state in accordance with an exemplary embodiment of the present disclosure. As shown in FIG. 9, the second ego vehicle state information of the vehicle at the current time frame and the second obstacle state information at the current time frame can be obtained by vehicle-mounted information sensing. The ego vehicle state information noise reduction and ego vehicle state information completeness check is performed on the second ego vehicle state information to obtain complete first ego vehicle state information. The ego vehicle position probability distribution information is predicted based on the first ego vehicle state information, and the first position probability distribution information of the ego vehicle at the future time frame is obtained. Obstacle type identification is performed based on the second obstacle state information (the identification process is similar to the above-mentioned identification process based on the first obstacle state information), and the object type of the obstacle is obtained. Obstacle state information noise reduction is performed on the second obstacle state information to obtain the third obstacle state information. An information completeness check is performed on the third obstacle state information to obtain complete first obstacle state information. The obstacle position probability distribution information is predicted based on the first obstacle state information, and the second position probability distribution information of the obstacle at the future time frame is obtained. A data validity check is performed on the first position probability distribution information and the second position probability distribution information, and valid first position probability distribution information and second position probability distribution information are output. The collision risk state between the ego vehicle and the obstacle is determined based on the first position probability distribution information and the second position probability distribution information to obtain the collision risk state.

In some optional embodiments, FIG. 10 is a block flow diagram of information noise reduction processing in accordance with an exemplary embodiment of the present disclosure. As shown in FIG. 10, the information noise reduction (e.g. ego vehicle state information noise reduction and obstacle state information noise reduction in FIG. 9) processing flow may include that the input information may be any one of the ego vehicle state information and the obstacle state information. Whether the Gaussian distribution is satisfied is determined, and if the Gaussian distribution is satisfied, an unscented Kalman filtering processing is performed on the input information to obtain the noise-reduced information and noise (namely, a new state and a new covariance matrix updated in the above-mentioned noise reduction process). If the Gaussian distribution is not satisfied, a particle filtering processing is performed on the input information to obtain the noise-reduced information and noise.

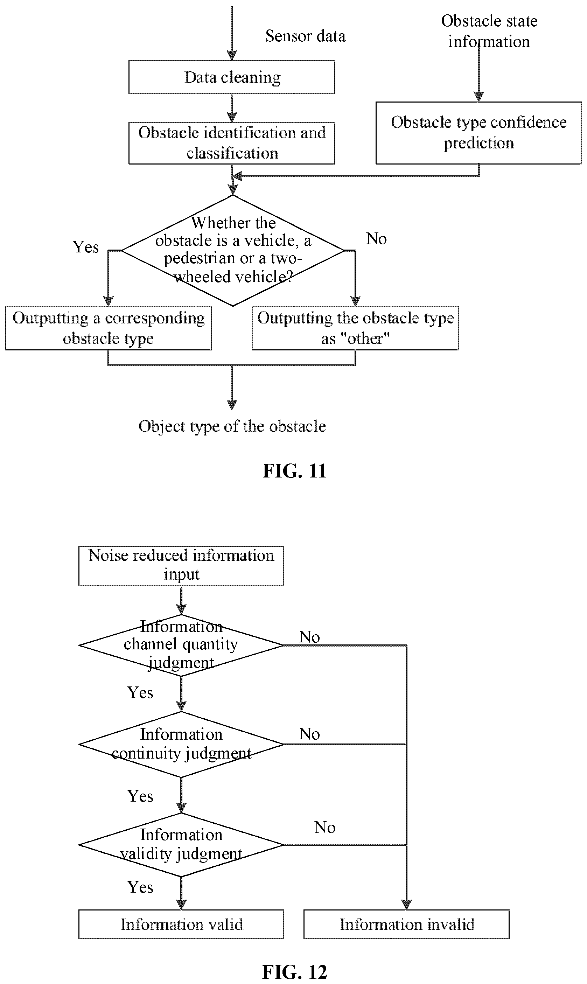

In some optional embodiments, FIG. 11 is a block flow diagram of identification of an obstacle type in accordance with an exemplary embodiment of the present disclosure. As shown in FIG. 11, data cleaning is performed on the sensor data to obtain the cleaned sensor data, and obstacle identification and classification are performed based on the cleaned sensor data to obtain the first type of the obstacle. An obstacle type confidence prediction is performed based on the state information (e.g. The first obstacle state information) of the obstacle to obtain the confidence of the first type of the obstacle. It is judged whether the obstacle is a vehicle, a pedestrian or a two-wheeled vehicle based on the first type and the confidence, and if so, the corresponding type is output as the object type of the obstacle. If the obstacle is not a vehicle, a pedestrian, or a two-wheeled vehicle, the obstacle type is output as another type as the object type of the obstacle.

In some optional embodiments, FIG. 12 is a block flow diagram of completeness check of information in accordance with an exemplary embodiment of the present disclosure. As shown in FIG. 12, information channel quantity (i.e. the above-mentioned quantity of information channels) judgment is performed on the noise-reduced information based on the input of the noise-reduced information (i.e. the third ego vehicle state information or the third obstacle state information), and if the quantity of information channels satisfies a pre-set channel quantity, information continuity judgement is performed, otherwise it is determined that the information is invalid. If the information satisfies the continuity condition, the validity of the information is judged, otherwise, it is determined that the information is invalid. If the information satisfies the validity condition, the information is determined to be valid, otherwise, the information is determined to be invalid.

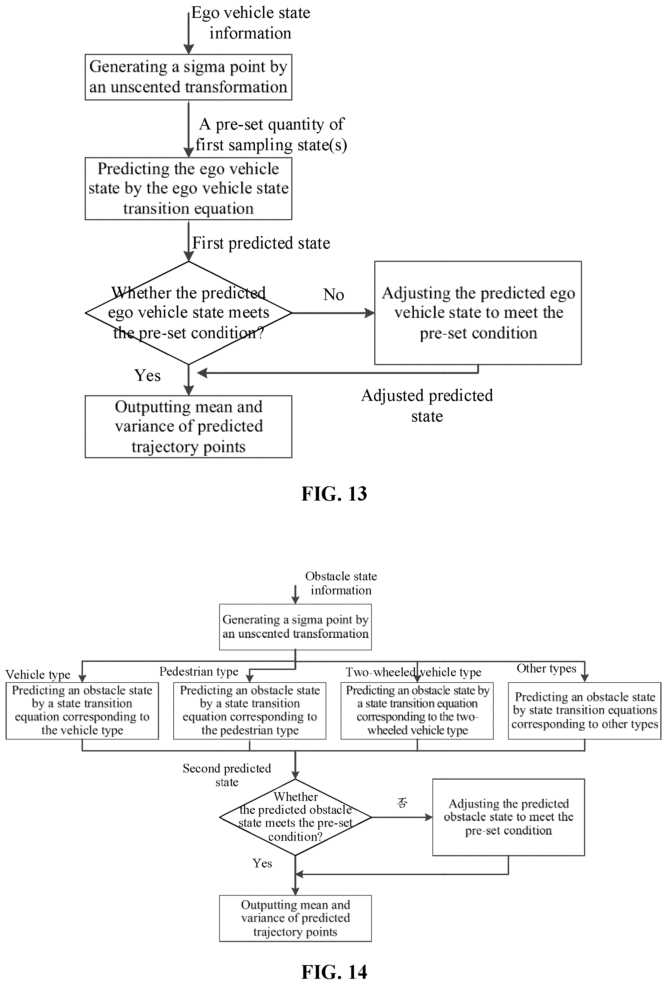

In some optional embodiments, FIG. 13 is a block flow diagram of ego vehicle position probability distribution information prediction in accordance with an exemplary embodiment of the present disclosure. As shown in FIG. 13, the ego vehicle state information can be the first ego vehicle state information, the sigma point (namely, the first sampling state) is generated based on the unscented transformation, and the first predicted state corresponding to each of first sampling states in the future time frame is predicted based on the ego vehicle state transition equation. Whether the predicted first predicted state of the ego vehicle satisfies the pre-set condition (namely, the first pre-set condition) is determined. If the first pre-set condition is satisfied, the mean and the variance of predicted trajectory points (namely, the future time frame), namely, the position mean and the variance at the future time frame, are predicted based on the first predicted state. If the first predicted state does not satisfy the first pre-set condition, the predicted first predicted state is adjusted, and the mean and the variance of the predicted trajectory points are predicted based on the adjusted predicted state.

In some optional embodiments, FIG. 14 is a block flow diagram of obstacle position probability distribution information prediction in accordance with an exemplary embodiment of the present disclosure. As shown in FIG. 14, the obstacle state information may be the first obstacle state information described above. The sigma point(s) (namely, a pre-set quantity of second sampling states) is/are generated via the unscented transformation, the state transition equation (namely, the target state transition equation) of the obstacle is determined according to the obstacle type, and the second predicted state (namely, the predicted obstacle state) of each of the second sampling states at the future time frame is predicted based on the state transition equation of the obstacle. Whether the second predicted state meets the pre-set condition (namely, the second pre-set condition) is judged. If the second predicted state meets the pre-set condition, the mean and the variance of the predicted trajectory points of the obstacle are determined based on the second predicted state. If the second predicted state does not satisfy the pre-set condition, the predicted second predicted state is adjusted to obtain an adjusted predicted state meeting the pre-set condition. The mean and the variance of the predicted trajectory points of the obstacle are determined based on the adjusted predicted state.

In some optional embodiments, a validity determination may also be made on the mean and variance of the predicted trajectory points to determine the validity of the mean and variance of the predicted track points.

The method of the embodiment of the present disclosure can obtain an initial noise situation of the ego vehicle state information and the obstacle state information and a noise situation in the position probability distribution information prediction process by means of the unscented transformation, and can embody the noise in the prediction result. At the same time, for different types of obstacles, using different state transition equations to predict the future state can better accurately predict the future states of different types of obstacles; and in the prediction process, constraints are performed simultaneously in combination with the actual situations of kinematics to normalize the prediction results (for example, the first predicted state and the second predicted state), such that the prediction results can meet the actual situations. In addition, the method of the embodiment of the present disclosure can simultaneously take into account a uniform variable velocity motion situations and motion conditions of a variable acceleration and a variable yaw rate of the ego vehicle and the obstacle, contributing to improving the accuracy of the prediction result. The predicted first position probability distribution information and second position probability distribution information at the future time frame are used for the determination of the collision risk state, such that the interference situation between the ego vehicle and the obstacle on the basis of which the collision risk state is determined can be a probability value falling within the interval of 0 to 1 rather than a Boolean variable, and the determination of the collision risk state can tolerate the influence of noise, which helps to improve the robustness of the collision risk state.

In some optional embodiments, the step 204 of determining collision risk state of the vehicle with the obstacle based on the first position probability distribution information and the second position probability distribution information corresponding to the future time frame may include:

Taking any one of the future time frame as the target future time frame, determining a position distribution overlap rate of the vehicle and the obstacle at the target future time frame based on the first position probability distribution information and the second position probability distribution information corresponding to the target future time frame; and determining the collision risk state of the vehicle with the obstacle based on the position distribution overlap rate between the vehicle and the obstacle at the target future time frame.

The position distribution overlap rate may refer to an overlap rate between a first position distribution region of the vehicle and a second position distribution region of the obstacle.

In some optional embodiments, a first probability distribution elliptical region (i.e. the first position distribution region) of the vehicle at the target future time frame may be determined based on the first position probability distribution information, and a second probability distribution elliptical region (i.e. the second position distribution region) of the obstacle at the target future time frame may be determined based on the second position probability distribution information. According to an area of the first probability distribution elliptical region, an area of the second probability distribution elliptical region, and an area of an overlap region between the first probability distribution elliptical region and the second probability distribution elliptical region, the position distribution overlap rate between the vehicle and the obstacle at the target future time frame is calculated.

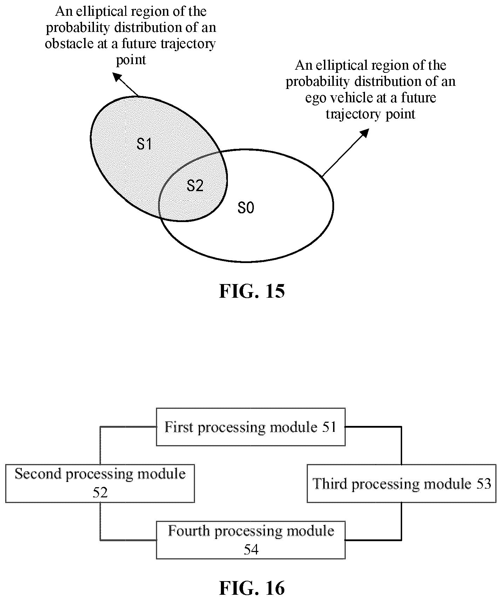

In some optional embodiments, FIG. 15 is a schematic diagram of a calculation principle of a position distribution overlap rate in accordance with an exemplary embodiment of the present disclosure. As shown in FIG. 15, if the area of the first probability distribution elliptical region (i.e. an elliptical region of the probability distribution of an obstacle future trajectory point) of the vehicle at the target future time frame is $S_0$, the area of the second probability distribution elliptical region (i.e. an elliptical region of the probability distribution of an ego vehicle future trajectory point) of the obstacle at the target future time frame is $S_1$, and the area of the overlap region between the first probability distribution elliptical region and the second probability distribution elliptical region is $S_2$, then the position distribution overlap rate between the vehicle and the obstacle at the target future time frame can be expressed as follows:

$$\text{overlap rate} = \frac{S_2}{S_0} * \frac{S_2}{S_1}$$

As can be seen, the overlap rate is a value ranging from 0 to 1. If the overlap rate is greater than a overlap rate threshold, it is determined that there is a risk of collision of the vehicle with the obstacle at the target future time frame. If the overlap rate is less than or equal to the overlap rate threshold, it may be determined that there is no risk of collision of the vehicle with the obstacle at the target future time frame. Further, the collision risk state of the vehicle with the obstacle can be determined by combining the collision risk state of the vehicle and the obstacle at each future time frame.

The above-mentioned embodiments of the present disclosure can be implemented alone or in any combination without conflict, and specifically can be set according to practical requirements, and the present disclosure is not limited thereto.

Any of the methods for determining a collision risk state in accordance with the embodiments of the present disclosure may be performed by any suitable device having data processing capabilities, including, but not limited to: a terminal device and a server, etc. Alternatively, any of the methods for determining a collision risk state in accordance with the embodiments of the present disclosure may be executed by a processor, wherein, for example, the processor executes any of the methods for determining a collision risk state mentioned by the embodiments of the present disclosure by calling a corresponding instruction stored in a memory. This will not be described below.

Exemplary apparatus

FIG. 16 is a schematic structural diagram of an apparatus for determining a collision risk state in accordance with an exemplary embodiment of the present disclosure. The apparatus of this embodiment can be used to implement a corresponding method embodiment of the present disclosure, and an apparatus as shown in FIG. 16 can include: a first processing module 51, a second processing module 52, a third processing module 53 and a fourth processing module 54.

A first processing module 51 can be configured for determining first ego vehicle state information about a vehicle at a current time frame and first obstacle state information of an obstacle around the vehicle at the current time frame.

A second processing module 52 can be configured for predicting, based on the first ego vehicle state information, first position probability distribution information of the vehicle at a future time frame.

A third processing module 53 can be configured for predicting, based on the first obstacle state information, second position probability distribution information of the obstacle at the future time frame.

A fourth processing module 54 can be configured for determining the collision risk state of the vehicle with the obstacle based on the first position probability distribution information and the second position probability distribution information corresponding to the future time frame.

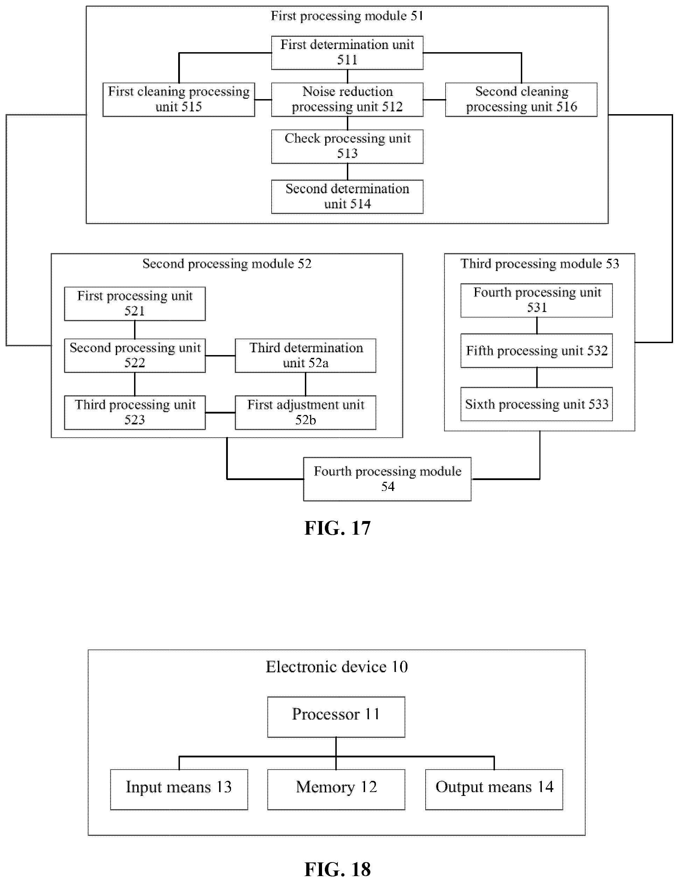

FIG. 17 is a schematic structural diagram of an apparatus for determining a collision risk state in accordance with another exemplary embodiment of the present disclosure.

In some optional embodiments, as shown in FIG. 17, the first processing module 51 may include: a first determination unit 511, a noise reduction processing unit 512, a check processing unit 513, and a second determination unit 514.

The first determination unit 511 can be configured for determining second ego vehicle state information of the vehicle at the current time frame and second obstacle state information of the obstacle at the current time frame based on sensor data collected by a sensor on the vehicle.

The noise reduction processing unit 512 can be configured for performing noise reduction processing on the second ego vehicle state information and the second obstacle state information to obtain the noise-reduced third ego vehicle state information and third obstacle state information.

The check processing unit 513 can be configured for performing a completeness check on the third ego vehicle state information and the third obstacle state information to obtain a check result.

The second determination unit 514 can be configured for determining the first ego vehicle state information and the first obstacle state information based on the third ego vehicle state information, the third obstacle state information, and the check result.

In some optional embodiments, the noise reduction processing unit 512 can be specifically configured for: performing noise reduction processing on the second ego vehicle state information based on an unscented Kalman filtering to obtain the third ego vehicle state information. Noise reduction processing is performed on the second obstacle state information based on the unscented Kalman filtering to obtain the third obstacle state information.

In some optional embodiments, the noise reduction processing unit 512 can be specifically configured for: determining an ego vehicle state vector based on the second ego vehicle state information. An unscented transformation is performed on the ego vehicle state vector to obtain a pre-set quantity of third sampling states and a third weight respectively corresponding to each of the third sampling states. A third predicted state respectively corresponding to each of the third sampling states is determined based on a first filtering state transition function. Based on each of the third predicted states and each of the third weights, a first predicted mean and a third covariance matrix are determined. A first Kalman gain is determined based on the first predicted mean and the third covariance matrix. The first predicted mean is updated based on the first Kalman gain to obtain a first new state. A third ego vehicle state information is determined based on the first new state.

In some optional embodiments, the noise reduction processing unit 512 can be specifically configured for:

determining a pre-set quantity of fifth sampling states by using the unscented transformation based on the first predicted mean and the third covariance matrix; determining first prediction observation amount respectively corresponding to each of the fifth sampling states based on a first filtering observation function; determining a fifth covariance matrix based on each of the first prediction observation amounts and each of the third weights; and determining the first Kalman gain based on the fifth covariance matrix.

In some optional embodiments, the noise reduction processing unit 512 can be specifically configured for: determining an obstacle state vector based on the second obstacle state information. An unscented transformation is performed on the obstacle state vector to obtain a pre-set quantity of fourth sampling states and a fourth weight respectively corresponding to each of the fourth sampling states. A fourth predicted state respectively corresponding to each of the fourth sampling states is determined based on a second filtering state transition function. Based on each of the fourth predicted states and each of the fourth weights) a second predicted mean and a fourth covariance matrix are determined. A second Kalman gain is determined based on the second predicted mean and the fourth covariance matrix. The second predicted mean is updated based on the second Kalman gain to obtain a second new state. A third obstacle state information is determined based on the second new state.

In some optional embodiments, the noise reduction processing unit 512 can be specifically configured for: determining a pre-set quantity of sixth sampling states by using the unscented transformation based on the second predicted mean and the fourth covariance matrix; determining second prediction observation amount respectively corresponding to each of the sixth sampling states based on a second filtering observation function; determining a sixth covariance matrix based on each of the second prediction observation amounts and each of the fourth weights; and determining the second Kalman gain based on the sixth covariance matrix.

In some optional embodiments, as shown in FIG. 17, the first processing module 51 may further include: a first cleaning processing unit 515 and a second cleaning processing unit 516.

The first cleaning processing unit 515 can be configured for performing data cleaning on the second ego vehicle state information to obtain the cleaned ego vehicle state information. The second cleaning processing unit 516 can be configured for performing data cleaning on the second obstacle state information to obtain the cleaned obstacle state information.

The noise reduction processing unit 512 can be specifically configured for: performing filtering processing on the cleaned ego vehicle state information based on the unscented Kalman filtering to obtain the third ego vehicle state information. Filtering processing is performed on the cleaned obstacle state information based on the unscented Kalman filtering to obtain the third obstacle state information.

In some optional embodiments, the noise reduction processing unit 512 can be specifically configured for: determining whether at least one of the second ego vehicle state information and the second obstacle state information satisfies a Gaussian distribution; and in response to at least one of the second ego vehicle state information and the second state information not satisfying the Gaussian distribution, based on a particle filtering, performing noise reduction processing on the second ego vehicle state information and the second obstacle state information to obtain the noise-reduced third ego vehicle state information and the third obstacle state information.

In some optional embodiments, as shown in FIG. 17, the second processing module 52 may include: a first processing unit 521, a second processing unit 522 and a third processing unit 523.

The first processing unit 521 can be configured for determining a pre-set quantity of first sampling states corresponding to the current time frame and a first weight respectively corresponding to each of the first sampling states by using an unscented transformation based on the first ego vehicle state information.

The second processing unit 522 can be configured for taking any one of the future time frames as a target future time frame, and determining a first predicted state corresponding to each of the first sampling states at the target future time frame respectively based on each of the first sampling states and an ego vehicle state transition function of the vehicle.

The third processing unit 523 can be configured for determining the first position probability distribution information of the vehicle at the target future time frame based on the first predicted state and the first weight respectively corresponding to each of the first sampling states.

In some optional embodiments, the first weight includes a first mean weight and a first variance weight.

The third processing unit 523 can be used in particular for: determining a first state mean of the vehicle at the target future time frame based on the first predicted state and the first mean weight respectively corresponding to each of the first sampling states. A first covariance matrix of the vehicle at the target future time frame are determined based on the first state mean, the first predicted state respectively corresponding to each of the first sampling states and the first variance weight. The first position probability distribution information of the vehicle at the target future time frame is determined based on the first state mean and the first covariance matrix

In some optional embodiments, the second processing module 52 may also include: a third determination unit 52a and a first adjustment unit 52b.

The third determination unit 52a can be configured for taking any one of the first sampling states as a target first sampling state, and determining whether the target first sampling state satisfies a first pre-set condition in the first predicted state corresponding to the target future time frame.

The first adjustment unit 52b can be configured for in response to the first predicted state not satisfying the first pre-set condition, adjusting the first predicted state based on the first pre-set condition, and taking an adjusted predicted state as the first predicted state.

In some optional embodiments, as shown in FIG. 17, the third processing module 53 may include: a fourth processing unit 531, a fifth processing unit 532 and a sixth processing unit 533.

The fourth processing unit 531 can be configured for determining a pre-set quantity of second sampling states corresponding to the current time frame and a second weight respectively corresponding to each of the second sampling states by using an unscented transformation based on the first obstacle state information.

The fifth processing unit 532 can be configured for taking any one of the future time frames as a target future time frame, and determining a second predicted state corresponding to each of the second sampling states at the target future time frame respectively based on each of the second sampling states and a target state transition function of the obstacle.

The sixth processing unit 533 may be configured for determining the second position probability distribution information of the obstacle at the target future time frame based on the second predicted state and the second weight respectively corresponding to each of the second sampling states.

In some optional embodiments, the fifth processing unit 532 can be specifically configured for: determining a object type of the obstacle. The target state transition function of the obstacle is determined based on the object type of the obstacle and a relationship between different types and the state transition function. Any one of the future time frames is taken as a target future time frame, and a second predicted state corresponding to each of the second sampling states at the target future time frame respectively is determined based on each of the second sampling states and a target state transition function.

In some optional embodiments, the fifth processing unit 532 can be specifically configured for: determining a first type of the obstacle using a classification network model based on perceptual sensor data at the current time frame; determining a confidence corresponding to the first type using a classification confidence prediction model based on the first state data of the obstacle; and based on the first type and the confidence, determining the object type for the obstacle.

In some optional embodiments, the fifth processing unit 532 may also be configured for: for any second predicted state, determining whether the second predicted state satisfies a second pre-set condition; and in response to the second predicted state not satisfying the second pre-set condition, adjusting the second predicted state based on the second pre-set condition, and taking the adjusted predicted state as the second predicted state.

Advantageous technical effects corresponding to exemplary embodiments of the present apparatus can be seen in the respective advantageous technical effects of the foregoing section of the exemplary methods and will not be described in detail here.

Exemplary electronic device

FIG. 18 is a structural diagram of an electronic device in accordance with an embodiment of the present disclosure, including at least one processor 11 and a memory 12.

The processor 11 may be a central processing unit (CPU) or other form of processing unit having data processing capabilities and/or instruction execution capabilities, and may control other components in the electronic device 10 to perform desired functions.

The memory 12 may include one or more computer program products, which may include various forms of computer-readable storage media, such as a volatile memory and/or a non-volatile memory. The volatile memory can include, for example, random access memory (RAM) and/or cache memory (cache), etc. The volatile memory can include, for example, a read-only memory (ROM), a hard drive, a flash memory, etc. One or more computer program instructions can be stored on a computer-readable storage medium, and the processor 11 can run one or more computer program instructions to implement the methods and/or other desired functions of the various embodiments disclosed above.

In one example, the electronic device 10 may further include: an input means 13 and an output means 14, these components being interconnected via a bus system and/or other forms of connection mechanisms (not shown).

The input means 13 may also include, for example, a keyboard, a mouse, etc.

The output means 14 may output various information to the outside, which may include, for example, a display, speakers, a printer, and a communication network and its connected remote output devices, etc.

Of course, for simplicity, only some of the components of the electronic device 10 relevant to the present disclosure are shown in FIG. 18, omitting components such as buses, input/output interfaces, etc. In addition, the electronic device 10 may include any other suitable components depending on the particular application scenario.

Exemplary computer program product and computer-readable storage medium

In addition to the methods and apparatus described above, an embodiment of the present disclosure may also provide a computer program product including a computer program instruction which, when executed by a processor, causes the processor to perform the steps in the methods of various embodiments of the present disclosure described in the "exemplary methods" section above.

For the computer program product, the program codes for performing the operations of the embodiments of the present disclosure may be written in one or more programming languages or any combination thereof, the programming languages including object-oriented programming languages such as Java, C+, etc, and conventional procedural programming languages, such as the "C" language or similar programming languages. The program codes may be executed entirely on the user's computing device, partly on the user's device, as a stand-alone software package, partly on the user's computing device and partly on a remote computing device, or entirely on a remote computing device or a server.

Furthermore, an embodiment of the present disclosure may also be a computer-readable storage medium having stored thereon a computer program instruction which, when executed by a processor, causes the processor to perform the steps in the methods of various embodiments of the present disclosure described in the "exemplary methods" section above.

The computer-readable storage medium may take any combination of one or more readable media. The readable medium may be a readable signal medium or a readable storage medium. The readable storage medium includes, for example, but not limited to, an electronic, magnetic, optical, electromagnetic, infrared, or semiconductor system, apparatus, or means, or a combination of any of the foregoing. More specific examples of readable storage medium may include (a non-exhaustive list): an electrical connection with one or more conductive leads, a portable computer disc, a hard drive, a random access memory (RAM), a read-only memory (ROM), an erasable programmable read-only memory (EPROM) or a flash memory (FLASH), a fiber optic, a portable compact disc read-only memory (CD-ROM), an optical storage device, a magnetic storage device, or any suitable combination thereof.

While the general principles of the disclosure have been described above in connection with specific embodiments, the advantages, advantages, effects, and the like set forth in the present disclosure are merely exemplary and not limiting, and are not to be construed as being necessary to the various embodiments of the present disclosure. In addition, the specific details disclosed above are only for the purpose of illustration and ease of understanding, and not for limitation. The above-mentioned details do not limit the necessity of using the specific details mentioned above to implement the present disclosure.

A person skilled in the art can make various modifications and variations in the present disclosure without departing from the spirit or scope of the present disclosure. Thus, it is intended that the present disclosure cover these modifications and variations of the present disclosure provided they come within the scope of the appended claims and their equivalent technologies.

## Claims

**1.** A method for determining a collision risk state, comprising:

determining (201) first ego vehicle state information of a vehicle at a current time frame and first obstacle state information of an obstacle around the vehicle at the current time frame;

predicting (202), based on the first ego vehicle state information, first position probability distribution information of the vehicle at a future time frame;

predicting (203), based on the first obstacle state information, second position probability distribution information of the obstacle at the future time frame; and

determining (204) the collision risk state of the vehicle with the obstacle based on the first position probability distribution information and the second position probability distribution information corresponding to the future time frame.

**2.** The method according to claim 1, wherein the predicting, based on the first ego vehicle state information, first position probability distribution information of the vehicle at a future time frame comprises:

determining (2021), based on the first ego vehicle state information, a pre-set quantity of first sampling states corresponding to the current time frame and a first weights respectively corresponding to the first sampling states by using an unscented transformation;

for each of the first sampling states, determining (2022) a first predicted state corresponding to the first sampling state at the future time frame based on the first sampling state and an ego vehicle state transition function of the vehicle; and

determining (2023) the first position probability distribution information of the vehicle at the future time frame based on the first predicted state and the first weight respectively corresponding to each of the first sampling states.

3. The method according to claim 2, wherein the first weight comprises a first mean weight and a first variance weight; and

the determining the first position probability distribution information of the vehicle at the future time frame based on the first predicted state and the first weight respectively corresponding to each of the first sampling states comprises:

determining (20231) the first state mean of the vehicle at the future time frame based on the first predicted state and the first mean weight respectively corresponding to each of the first sampling states;
determining (20232) a first covariance matrix of the vehicle at the future time frame based on the first state mean, the first predicted state respectively corresponding to each of the first sampling states and the first variance weight; and
determining (20233) the first position probability distribution information of the vehicle at the future time frame based on the first state mean and the first covariance matrix.

4. The method according to claim 2, wherein after determining a first predicted state corresponding to the first sampling state at the future time frame based on the first sampling state and an ego vehicle state transition function of the vehicle, the method further comprises:

taking any of the first sampling states as a target first sampling state, and determining (202a) whether the first predicted state corresponding to the target first sampling state at the future time frame satisfies a first pre-set condition; and
in response to the first predicted state not satisfying the first pre-set condition, adjusting (202b) the first predicted state based on the first pre-set condition to take the adjusted predicted state as the first predicted state.

5. The method according to claim 1, wherein the predicting, based on the first obstacle state information of the obstacle, second position probability distribution information of the obstacle at the future time frame comprises:

determining (2031), based on the first state information, a pre-set quantity of second sampling states corresponding to the current time frame and a second weights respectively corresponding to the second sampling states by using an unscented transformation;
for each of the second sampling states, determining (2032) a second predicted state corresponding to the second sampling state at the future time frame based on the second sampling state and a target state transition function of the obstacle; and
determining (2033) the second position probability distribution information of the obstacle at the future time frame based on the second predicted state and the second weight respectively corresponding to each of the second sampling states.

6. The method according to claim 5, wherein the determining a second predicted state corresponding to the second sampling state at the future time frame based on the second sampling state and a target state transition function of the obstacle comprises:

determining (20321) an object type of the obstacle;
determining (20322) the target state transition function of the obstacle based on the object type of the obstacle and a relationship between different types and the state transition function; and
determining (20323) the second predicted state corresponding to each of the second sampling states at the future time frame respectively based on each of the second sampling states and the target state transition function.

7. The method according to claim 6, wherein the determining an object type of the obstacle comprises:

determining a first type of the obstacle using a classification network model based on perceptual sensor data at the current time frame;
determining a confidence corresponding to the first type using a classification confidence prediction model based on the first state data of the obstacle; and
determining the object type of the obstacle based on the first type and the confidence.

8. The method according to claim 5, wherein after the determining a second predicted state corresponding to the second sampling state at the future time frame based on the second sampling state and a target state transition function of the obstacle, the method further comprises:

with regard to any of the second predicted states, determining whether the second predicted state satisfies a second pre-set condition; and

in response to the second predicted state not satisfying the second pre-set condition, adjusting the second predicted state based on the second pre-set condition to take the adjusted predicted state as the second predicted state.

9. The method according to any one of claims 1-8, wherein the determining first ego vehicle state information of a vehicle at a current time frame and first obstacle state information of an obstacle around the vehicle at the current time frame comprises:

determining (2011) second ego vehicle state information of the vehicle at the current time frame and second obstacle state information of the obstacle at the current time frame based on sensor data collected by a sensor on the vehicle;

performing (2012) noise reduction processing on the second ego vehicle state information and the second obstacle state information to obtain the noise-reduced third ego vehicle state information and third obstacle state information;

performing (2013) a completeness check on the third ego vehicle state information and the third obstacle state information to obtain a check result; and

determining (2014) the first ego vehicle state information of the vehicle and the first obstacle state information of the obstacle based on the third ego vehicle state information, the third obstacle state information, and the check result.

10. The method according to claim 9, wherein the performing noise reduction processing on the second ego vehicle state information and the second obstacle state information of the obstacle to obtain the noise-reduced third ego vehicle state information and third obstacle state information of the obstacle comprises:

performing noise reduction processing on the second ego vehicle state information based on an unscented Kalman filtering to obtain the third ego vehicle state information; and

performing noise reduction processing on the second obstacle state information based on the unscented Kalman filtering to obtain the third obstacle state information.

11. The method according to claim 10, wherein before the performing noise reduction processing on the second ego vehicle state information based on an unscented Kalman filtering to obtain the third ego vehicle state information, the method further comprises:

performing data cleaning on the second ego vehicle state information to obtain the cleaned ego vehicle state information;

performing data cleaning on the second obstacle state information to obtain the cleaned obstacle state information; and

the performing noise reduction processing on the second ego vehicle state information based on an unscented Kalman filtering to obtain the third ego vehicle state information comprises:

performing filtering processing on the cleaned ego vehicle state information based on the unscented Kalman filtering to obtain the third ego vehicle state information; and

the performing noise reduction processing on the second obstacle state information based on the unscented Kalman filtering to obtain the third obstacle state information comprises:

performing filtering processing on the cleaned obstacle state information based on the unscented Kalman filtering to obtain the third obstacle state information.

12. The method according to claim 9, wherein the performing noise reduction processing on the second ego vehicle state information and the second obstacle state information to obtain the noise-reduced third ego vehicle state information and third obstacle state information comprises:

determining whether at least one of the second ego vehicle state information and the second obstacle state information satisfies a Gaussian distribution; and

in response to at least one of the second ego vehicle state information and the second obstacle state information not satisfying the Gaussian distribution, based on a particle filtering, performing noise reduction processing on the second ego vehicle state information and the second obstacle state information to obtain the noise-reduced third ego vehicle state information and the third obstacle state information.

13. An apparatus for determining a collision risk state, comprising:

a first processing module (51) configured for determining first ego vehicle state information of a vehicle at a current time frame and first obstacle state information of an obstacle around the vehicle at the current time frame;
a second processing module (52) configured for predicting, based on the first ego vehicle state information, first position probability distribution information of the vehicle at a future time frame;
a third processing module (53) configured for predicting, based on the first obstacle state information, second position probability distribution information of the obstacle at the future time frame; and
a fourth processing module (54) configured for determining the collision risk state of the vehicle with the obstacle based on the first position probability distribution information and the second position probability distribution information corresponding to the future time frame.

14. A computer-readable storage medium having stored thereon a computer program, which, when executed by a processor, cause the processor to implement the method according to any one of claims 1-12.

15. An electronic device, comprising:

a processor (11); and
a memory (12) configured for storing executable instructions of the processor,
wherein the processor is configured to read the executable instruction from the memory and execute the instruction to implement the method according to any one of claims 1-12.

Probability
distribution
of an obstacle
at future
trajectory
point

Probability
distribution of
an ego vehicle
at future
trajectory point

Obstacle

Ego
vehicle

**FIG. 1**

Determining first ego vehicle state information of a vehicle at a current time frame and first obstacle state information of an obstacle around the vehicle at the current time frame — 201

Predicting, based on the first ego vehicle state information, first position probability distribution information of the vehicle at a future time frame — 202

Predicting, based on the first obstacle state information, second position probability distribution information of the obstacle at the future time frame — 203

Determining the collision risk state of the vehicle with the obstacle based on the first position probability distribution information and the second position probability distribution information corresponding to the future time frame — 204

**FIG. 2**

Determining second ego vehicle state information of the vehicle at the current time frame and second obstacle state information of the obstacle at the current time frame based on sensor data collected by a sensor on the vehicle ⟋ 2011

Performing noise reduction processing on the second ego vehicle state information and the second obstacle state information to obtain the noise-reduced third ego vehicle state information and third obstacle state information ⟋ 2012

Performing a completeness check on the third ego vehicle state information and the third obstacle state information to obtain a check result ⟋ 2013

Determining the first ego vehicle state information and the first obstacle state information based on the third ego vehicle state information, the third obstacle state information, and the check result ⟋ 2014

Predicting, based on the first ego vehicle state information, first position probability distribution information of the vehicle at a future time frame ⟋ 202

Predicting, based on the first obstacle state information, second position probability distribution information of the obstacle at the future time frame ⟋ 203

Determining the collision risk state of the vehicle with the obstacle based on the first position probability distribution information and the second position probability distribution information corresponding to the future time frame ⟋ 204

**FIG. 3**

| Determining first ego vehicle state information of a vehicle at a current time frame and first obstacle state information of an obstacle around the vehicle at the current time frame | 201 |

| Determining a pre-set quantity of first sampling states corresponding to the current time frame and a first weight respectively corresponding to each of the first sampling states by using an unscented transformation based on the first ego vehicle state information | 2021 |

| Taking any of the future time frames as a target future time frame, for each first sampling state, determining a first predicted state corresponding to the first sampling state at the target future time frame based on the first sampling state and an ego vehicle state transition function of the vehicle | 2022 |

| Determining the first position probability distribution information of the vehicle at the target future time frame based on the first predicted state and the first weight respectively corresponding to each of the first sampling states | 2023 |

| Predicting, based on the first obstacle state information, second position probability distribution information of the obstacle at the future time frame | 203 |

| Determining the collision risk state of the vehicle with the obstacle based on the first position probability distribution information and the second position probability distribution information corresponding to the future time frame | 204 |

**FIG. 4**

Determining first ego vehicle state information of a vehicle at a current time frame and first obstacle state information of an obstacle around the vehicle at the current time frame — 201

Determining a pre-set quantity of first sampling states corresponding to the current time frame and a first weight respectively corresponding to each of the first sampling states by using an unscented transformation based on the first ego vehicle state information — 2021

Taking any one of the future time frames as a target future time frame, for each first sampling state, determining a first predicted state corresponding to the first sampling state at the target future time frame based on the first sampling state and an ego vehicle state transition function of the vehicle — 2022

Determining the first state mean of the vehicle at the future time frame based on the first predicted state and the first mean weight respectively corresponding to each of the first sampling states — 20231

Determining a first covariance matrix of the vehicle at the target future time frame based on the first state mean, the first predicted state respectively corresponding to each of the first sampling states and the first variance weight — 20232

Determining the first position probability distribution information of the vehicle at the target future time frame based on the first state mean and the first covariance matrix — 20233

Predicting, based on the first obstacle state information, second position probability distribution information of the obstacle at the future time frame — 203

Determining the collision risk state of the vehicle with the obstacle based on the first position probability distribution information and the second position probability distribution information corresponding to the future time frame — 204

**FIG. 5**

Determining first ego vehicle state information of a vehicle at a current time frame and first obstacle state information of an obstacle around the vehicle at the current time frame — 201

Determining a pre-set quantity of first sampling states corresponding to the current time frame and a first weight respectively corresponding to each of the first sampling states by using an unscented transformation based on the first ego vehicle state information — 2021

Taking any one of the future time frames as a target future time frame, for each first sampling state, determining a first predicted state corresponding to the first sampling state at the target future time frame based on the first sampling state and an ego vehicle state transition function of the vehicle — 2022

Taking any one of the first sampling states as a target first sampling state, determining whether the first predicted state corresponding to the target first sampling state at the future time frame satisfies a first pre-set condition — 202a

In response to the first predicted state not satisfying the first pre-set condition, adjusting the first predicted state according to the first pre-set condition, and taking the adjusted predicted state as the first predicted state — 202b

Determining the first position probability distribution information of the vehicle at the target future time frame based on the first predicted state and the first weight respectively corresponding to each of the first sampling states — 2023

Predicting, based on the first obstacle state information, second position probability distribution information of the obstacle at the future time frame — 203

Determining the collision risk state of the vehicle with the obstacle based on the first position probability distribution information and the second position probability distribution information corresponding to the future time frame — 204

**FIG. 6**

Determining first ego vehicle state information of a vehicle at a current time frame and first obstacle state information of an obstacle around the vehicle at the current time frame ⟋ 201

Predicting, based on the first ego vehicle state information, first position probability distribution information of the vehicle at a future time frame ⟋ 202

Determining, based on the first obstacle state information, a pre-set quantity of second sampling states corresponding to the current time frame and a second weight respectively corresponding to each of the second sampling states by using an unscented transformation ⟋ 2031

Taking any one of the future time frames as a target future time frame, for each second sampling state, determining a second predicted state corresponding to the second sampling state at the future time frame based on the second sampling state and a target state transition function of the obstacle ⟋ 2032

Determining the second position probability distribution information of the obstacle at the target future time frame based on the second predicted state and the second weight respectively corresponding to each of the second sampling states ⟋ 2033

Determining the collision risk state of the vehicle with the obstacle based on the first position probability distribution information and the second position probability distribution information corresponding to the future time frame ⟋ 204

**FIG. 7**

Determining first ego vehicle state information of a vehicle at a current time frame and first obstacle state information of an obstacle around the vehicle at the current time frame — 201

Predicting, based on the first ego vehicle state information, first position probability distribution information of the vehicle at a future time frame — 202

Determining, based on the first obstacle state information, a pre-set quantity of second sampling states corresponding to the current time frame and a second weight respectively corresponding to each of the second sampling states by using an unscented transformation — 2031

Determining an object type of the obstacle — 20321

Determining the target state transition function of the obstacle based on the object type of the obstacle and a relationship between different types and the state transition function — 20322

Taking any one of the future time frames as a target future time frame, determining the second predicted state corresponding to each of the second sampling states at target future time frame respectively based on each of the second sampling states and the target state transition function — 20323

Determining the second position probability distribution information of the obstacle at the target future time frame based on the second predicted state and the second weight respectively corresponding to each of the second sampling states — 2033

Determining the collision risk state of the vehicle with the obstacle based on the first position probability distribution information and the second position probability distribution information corresponding to the future time frame — 204

**FIG. 8**

Vehicle-mounted information perception

Second ego vehicle state information

Second obstacle state information

Second obstacle state information

Noise reduction of ego vehicle state information

Obstacle type identification

Noise reduction of the obstacle state information

Third ego vehicle state information

Object type of the obstacle

Third obstacle state information

Completeness check of ego vehicle state information

Completeness check of obstacle state information

First ego vehicle state information

First obstacle state information

Ego vehicle position probability distribution information prediction

Obstacle position probability distribution information prediction

First position probability distribution information

Second position probability distribution information

Detection and output of position probability distribution information of the ego vehicle and the obstacle at a future time frame

Determination of a collision risk state of the ego vehicle with the obstacle

**FIG. 9**

Input information

Data cleaning

Satisfying the Gaussian Distribution ?

Yes

No

Unscented Kalman filtering processing

Particle filtering processing

Noise-reduced information and noise

**FIG. 10**

Sensor data

Obstacle state information

Data cleaning

Obstacle identification and classification

Obstacle type confidence prediction

Whether the obstacle is a vehicle, a pedestrian or a two-wheeled vehicle?

Yes

No

Outputting a corresponding obstacle type

Outputting the obstacle type as "other"

Object type of the obstacle

**FIG. 11**

Noise reduced information input

Information channel quantity judgment

No

Yes

Information continuity judgment

No

Yes

Information validity judgment

No

Yes

Information valid

Information invalid

**FIG. 12**

**FIG. 13**

**FIG. 14**

An elliptical region of the probability distribution of an obstacle at a future trajectory point

An elliptical region of the probability distribution of an ego vehicle at a future trajectory point

S1

S2

S0

**FIG. 15**

First processing module 51

Second processing module 52

Third processing module 53

Fourth processing module 54

**FIG. 16**

First processing module 51

First determination unit 511

First cleaning processing unit 515

Noise reduction processing unit 512

Second cleaning processing unit 516

Check processing unit 513

Second determination unit 514

Second processing module 52

First processing unit 521

Second processing unit 522

Third determination unit 52a

Third processing unit 523

First adjustment unit 52b

Third processing module 53

Fourth processing unit 531

Fifth processing unit 532

Sixth processing unit 533

Fourth processing module 54

**FIG. 17**

Electronic device 10

Processor 11

Input means 13

Memory 12

Output means 14

**FIG. 18**